# EUROPEAN PATENT SPECIFICATION

(11) **EP 4 529 603 B1**
(45) Date of publication and mention of the grant of the patent: **25.03.2026**
(21) Application number: 23710438.5
(22) Date of filing: 24.02.2023
(51) Int. Cl.: F24F 12/00, F24F 110/10, F24F 110/20, F24F 110/72, F24F 110/66, F24F 110/64

(54) **A VENTILATION SYSTEM FOR A RESIDENTIAL BUILDING**
BELÜFTUNGSSYSTEM FÜR EIN WOHNGEBÄUDE
SYSTÈME DE VENTILATION POUR BÂTIMENT RÉSIDENTIEL

(30) Priority: 23.05.2022 BE 202205390
(43) Date of publication of application: 02.04.2025
(73) Proprietor: Renson NV, 8790 Waregem (BE)
(72) Inventor: DELBAERE, Elmar Maurits Raymonde Agnes Jacques, 8940 Wervik (BE); VAN OVERBEKE, Maarten Jonas Pol, 8570 Ingooigem (BE)
(74) Representative: Gevers Patents
(86) International application number: PCT/IB2023/051707
(87) International publication number: WO 2023/227961

(56) References cited:
- EP-A1- 2 546 581
- DE-U1- 202005 013 250
- KR-B1- 101 263 656
- KR-B1- 101 263 656
- US-A1- 2010 122 794
- US-A1- 2017 045 257

## Description

### Technical field

The present invention relates to a ventilation system for a residential building. The present invention also relates to a residential home comprising the ventilation system and to the use of the ventilation system for residential mechanical ventilation with heat recovery. The present invention also relates to a method of mounting the ventilation system to a ceiling in a residential building.

### State of the art

A mechanical ventilation system for balanced ventilation with heat recovery (Mechanical Ventilation with Heat Recovery - MVHR) is known. In general, there are two types of systems, namely based on a heat recovery ventilation (HRV) module or based on an energy recovery ventilation (ERV) module. An HRV unit exchanges sensible heat between two air streams. In this way, it is possible to heat up the incoming air flow in winter and cool it down in summer. An ERV unit exchanges energy between two air streams and can transfer both sensible heat and latent heat. In this way, it is possible to heat up and/or humidify the incoming air flow in winter and cool down and/or dehumidify it in summer.

It is known that both temperature and humidity of the air are crucial for efficient climate control and for creating optimal conditions for health, for example: too high a temperature and humidity increase the risk of a heat stroke, too high a humidity increase the risk of rheumatism, a too low temperature and humidity increase the risk of respiratory problems, a too low humidity increases the risk of dehydration, etc. In addition to possible health problems, there are, of course, other disadvantages, such as possible damage to material objects (e.g. warping parquet or wooden furniture due to excessive humidity).

Furthermore, the choice for an HRV unit or an ERV unit is also partly determined by the climate. In an extreme climate where it is i.a. hot and humid or cold and dry, an ERV unit is recommended. While an HRV unit is more recommended for a moderate climate. This choice is also influenced by the specific needs. For example, an HRV unit is better suited for a house with a high humidity level (e.g. a relative humidity of 60% or more) since an ERV unit will typically maintain the humidity level.

It is also known to combine both an HRV unit and an ERV unit in a ventilation system, both in a serial configuration, e.g. as disclosed in WO 2007/051286 A1, and in a parallel configuration, e.g. as disclosed in DE 20 2005 013 250 U1.

The ventilation system disclosed in WO 2007/051286 A1 is specifically aimed at making optimal use of the natural environment in a basement room where the humidity level hardly varies. The system comprises a housing that is provided with two (air) inlets and three (air) outlets and wherein an ERV unit and an HRV unit are placed. The first inlet serves to draw in outside air, which then passes first over the ERV unit and then over the HRV unit to the first outlet that opens onto the ground floor of the building. The second inlet serves to draw in basement air which then passes over the ERV unit or the HRV unit. When passing over the HRV unit, the basement air is sent to a second outlet that opens onto the basement area, in other words, this is a recirculation. When passing over the ERV unit, the basement air is sent to a third outlet that opens to the outside environment.

The ventilation system disclosed in DE 20 2005 013 250 U1 comprises an HRV unit and an ERV unit in a parallel configuration. A bypass is also provided such that an airflow from the outside to the inside of the building is possible without having to pass over the HRV/ERV unit.

The ventilation system disclosed in US 2017/045257 A1 comprises a heat exchanger composed of parallel and serial HRV and ERV units. Specifically, the inlet side of the heat exchanger is provided with a parallel HRV/ERV unit. After each HRV/ERV unit, the other unit follows on the same flow path. Each flow path is thus serially also composed of an ERV/HRV combination. In this way, the heat exchanger comprises at least eight separate units divided into two blocks of four units with an open space in between. A damper valve is provided on the inlet side to block flow through an HRV/ERV unit. In this configuration, there is then a bypass flow through the open space.

The ventilation system disclosed in KR 101 263 656 B1 discloses an heat exchanger with two air-to-air heat exchangers arranged in parallel. A rotatable valve is provided on both sides between the heat exchangers. Each damper is movable between different positions to allow airflow over only one heat exchanger; or over both heat exchangers; or a bypass over the heat exchangers.

For use in residential buildings, a ventilation system is typically used with a compact heat exchanger as the central part of the system. An example of such a heat exchanger is disclosed in WO 2022/018021 A1. The known heat exchanger comprises a rectangular housing wherein a first inlet, a second inlet, a first outlet and a second outlet are provided, wherein the first inlet and the first outlet together are part of a first flow path and wherein the second inlet and the second exhaust together are part of a second flow path. The heat exchanger further comprises an air-to-air plate heat exchanger positioned inside the housing, said air-to-air plate heat exchanger being provided with a plurality of first channels that are part of the first flow path and a plurality of second channels that are part of the second flow path. Two bypasses are also provided inside the housing such that an airflow from the outside to the inside (or vice versa) can bypass the plate heat exchanger. Valves are provided for closing/opening one or both bypasses, which valves are formed by a plurality of adjustable vanes.

### Description of the invention

The present invention relates to a ventilation system for a residential building, said ventilation system comprising a heat exchanger, said heat exchanger comprising: a housing wherein a first inlet, a second inlet, a first outlet, and a second outlet are provided, wherein the first inlet and the first outlet together are part of a first flow path and wherein the second inlet and the second outlet together are part of a second flow path; a first air-to-air plate heat exchanger and a second air-to-air plate heat exchanger positioned inside the housing in a parallel airflow configuration, wherein each air-to-air plate heat exchanger comprises a plurality of first channels that are part of the first flow path and a plurality of second channels that are part of the second flow path, wherein the heat exchanger does not comprise a flow path around the plate heat exchanger; and a first valve positioned on the first flow path inside the housing adjacent to the first air-to-air plate heat exchanger and a second valve positioned on the second flow path inside the housing adjacent to the second air-to-air plate heat exchanger, wherein each valve is adjustable between at least an open position, a closed position and an intermediate position, wherein each valve comprises a plurality of adjustable vanes that are mutually parallel and rotatable about their longitudinal direction, wherein, in the closed position of a valve, the adjustable vanes together form a continuous plane, wherein the first channels and the second channels extend in an orientation perpendicular to said longitudinal direction.

The provision of two parallel plate heat exchangers in combination with the valves allows to create the functionality of a bypass over the plate heat exchangers without the need for separate air channels that are separated from the plate heat exchangers. More specifically, if both valves are closed, then there is only a flow over the first air-to-air plate heat exchanger on the second flow path (e.g. from the outside environment to the inside of the building) and only flow over the second air-to-air plate heat exchanger on the first flow path (e.g. from the inside of the building to the outside environment). Therefore, there is only flow in one direction over each plate heat exchanger, such that there is no question of heat recovery and/or energy recovery. In other words, a bypass has been formed that allows airflows from the inside to the outside and vice versa without them interacting with each other. All this without the need for separate air channels (i.e. the heat exchanger does not comprise a flow path around the plate heat exchangers), such that the heat exchanger can be of a more compact configuration, compared to the heat exchangers disclosed in DE 20 2005 013 250 U1 and in WO 2022/018021 A1.

In addition, the bypasses allow to bring in cool air from the outside in an energy-efficient manner and to remove warm air from the inside (e.g. on hot summer days when, during the night, the temperature is lower than the desired temperature, cool air can be brought in directly).

Such perpendicular vanes (relative to the flow channels) lead to a more stable flow compared to parallel vanes, especially in an intermediate position. Because of perpendicular vanes, each flow channel is substantially equally closed off by the vanes, while with parallel vanes the flow is then being concentrated on a limited number of flow channels. In other words, the vanes extend perpendicular to the plates between which the flow channels are formed.

The use of a plurality of vanes reduces the total space required for each valve compared to a single vane valve. Namely, a single vane valve extends further away from the plate heat exchanger in its open position, i.e. approximately over a distance equal to a dimension of the plate heat exchanger. When several vanes are used, they each extend less far from the plate heat exchanger in their open position, i.e. approximately over a distance equal to a dimension of the plate heat exchanger divided by the number of vanes.

In an embodiment, the first inlet is configured to supply outside air to the heat exchanger, the second inlet is configured to supply indoor air to the heat exchanger, the first outlet is configured to exhaust air from the heat exchanger to an indoor space, and the second outlet is configured to exhaust air from the heat exchanger to an outdoor area.

In an embodiment, both inlets are located opposite each other in the housing. In an embodiment, both outlets are located opposite each other in the housing.

In an embodiment, the ventilation system further comprises a control module configured to independently control the first valve and the second valve, wherein the control module is configured to control the first valve and the second valve to at least one of the following configurations: an open configuration wherein the first and second valves are in their open position; and a bypass configuration wherein the first and second valves are in their closed positions. These different valve configurations allow the ventilation system to be adapted to the current needs.

In an embodiment, the first air-to-air plate heat exchanger is a heat recovery ventilation unit (HRV unit) and the second air-to-air plate heat exchanger is an energy recovery ventilation unit (ERV unit). Placing the HRV unit and the ERV unit in a parallel configuration is advantageous as it allows flexible use of each unit. The units (or modules) can be used separately, but can also be used together. In this way, the ventilation system can be used in different climates and/or weather conditions. For example, only the ERV unit can be used during hot and humid weather conditions, while only the HRV unit can be used during cold and humid weather conditions. In addition, the ventilation system allows for precise control of both temperature and humidity, as both modules can be used together.

In an embodiment, the ventilation system further comprises a control module configured to independently control the first valve and the second valve, wherein the control module is configured to control the first valve and the second valve to at least one of the following configurations: an open configuration wherein the first and second valves are in their open position; a bypass configuration wherein the first and second valves are in their closed positions; an energy recovery configuration wherein the first valve is in its closed position and the second valve is not in its closed position; and a heat recovery configuration wherein the first valve is not in its closed position and wherein the second valve is in its closed position. These different valve configurations allow the ventilation system to be adapted to the current needs.

In an embodiment, the heat exchanger is further provided with a third valve, positioned on the first flow path inside the housing adjacent to the second air-to-air plate heat exchanger and a fourth valve, positioned on the second flow path inside the housing adjacent to the first air-to-air plate heat exchanger, wherein the first valve and the fourth valve are preferably located on opposing sides of the first air-to-air plate heat exchanger and wherein the second valve and the third valve are preferably located on opposite sides of the second air-to-air plate heat exchanger. The use of at least four valves allows better control of the air flows over each flow path and each plate heat exchanger.

In an embodiment, the ventilation system further comprises a control module, configured for independently controlling each of the valves, wherein the control module is configured for controlling the valves to at least one of the following configurations: an open configuration wherein each valve is located in its open position; a closed configuration wherein each valve is located in its closed position; an energy recovery configuration wherein the first valve and the fourth valve are located in their closed position and the second valve and the third valve are not located in their closed position; a heat recovery configuration wherein the first valve and the fourth valve are not located in their closed position and the second valve and the third valve are located in their closed position; a first control configuration wherein the first valve and the fourth valve are located in their open position and the second valve and the third valve are located in their intermediate position; a second control configuration wherein the first valve and the fourth valve are located in their intermediate position and the second valve and the third valve are located in their open position; a third control configuration wherein each valve is located in its intermediate position; a first bypass configuration wherein the first valve and the second valve are located in their closed position and the third valve and the fourth valve are not located in their closed position; and a second bypass configuration wherein the first valve and the second valve are not located in their closed position and the third valve and the fourth valve are located in their closed position. These different valve configurations allow the ventilation system to be adapted to the current needs. In addition, these valve configurations allow both balanced and unbalanced configurations, which is more difficult to achieve in an embodiment with only two valves. A "balanced" configuration means that the input energy is in balance with the output energy for the HRV unit and/or for the ERV unit. The HRV unit and/or the ERV unit therefore work optimally if they are in balance. An "unbalanced" configuration means that the input energy is not in balance with the output energy for the HRV unit and/or for the ERV unit.

In addition, by combining both modules in the same heat exchanger, it is possible to longer ventilate in balanced operation in certain weather conditions. For example, if the weather is very cold, then an electrical resistance must typically be used for the HRV unit to heat the outside air. Without the electrical resistance, there is a risk of ice formation in the HRV unit due to the large difference in temperature of the outside air and the inside air. However, through combined use, such electrical resistance can be at least partially avoided by passing more of the outside air over the ERV unit such that the HRV unit can still sufficiently heat up a smaller volume of the very cold outside air with the outgoing outside air.

In an embodiment, each valve comprises one or more adjustable vanes, wherein each air-to-air plate heat exchanger has a first inlet side and a second inlet side, and each valve comprises a rectangular frame on which the one or more adjustable vanes are rotatably mounted, said rectangular frame of a respective valve connecting to a respective inlet side of a respective air-to-air plate heat exchanger. The rectangular frame allows to create a seal between the valve and the inlet side of the plate heat exchanger. This avoids or reduces unwanted air flows past the plate heat exchanger.

In an embodiment, each valve is located on its respective flow path in front of the respective air-to-air plate heat exchanger. Although the valves can also be located behind plate heat exchangers, it is advantageous to place the valves in front of them in order to limit undesired air flows and any pressure changes in the plate heat exchangers caused thereby.

In an embodiment, each valve is substantially continuously adjustable between its open position and its closed position. This further increases the controllability of the ventilation system and also increases the accuracy with which the temperature and humidity can be controlled by means of the ERV/HRV units.

In an embodiment, the first air-to-air plate heat exchanger and/or the second air-to-air plate heat exchanger operate on the basis of a cross flow. This constitutes a simple and efficient design.

In an embodiment, the ventilation system further comprises a sensor system, configured for measuring the temperature and/or the degree of humidity and/or the carbon dioxide content and/or the volatile organic matter content and/or the fine particulate matter content of the air of an indoor space and/or an outdoor space and for forwarding the measurements to the control module and wherein the heat exchanger further comprises a control module, configured for independently controlling each of the valves based on the received measurements. By providing the control module with additional information about the air (e.g. temperature, humidity, carbon dioxide content, etc.), it can set the ventilation system in the most suitable valve configuration according to needs.

An embodiment not falling under the scope of the claims relates to a ventilation system for a residential building, said ventilation system comprising a heat exchanger, said heat exchanger comprising: a beam-shaped housing wherein a first inlet, a second inlet, a first outlet, and a second outlet are provided, wherein the first inlet and the first outlet together are part of a first flow path and wherein the second inlet and the second outlet together are part of a second flow path, wherein the housing is configured to be attached to a wall in the building via a first of its walls; an air-to-air plate heat exchanger inside the housing and provided with a plurality of first channels that are part of the first flow path and a plurality of second channels that are part of the second flow path, wherein the air-to-air plate heat exchanger internally divides the beam-shaped housing into a first chamber and a second chamber; a first drive unit, arranged for driving an airflow over the first flow path and a second drive unit arranged for driving an airflow over the second flow path; at least four condensation discharge openings in the housing, at least two of which are located in the first chamber and at least two of which are located in the second chamber, wherein one of the condensation discharge openings in the first chamber and one of the condensation discharge openings in the second chamber are located in opposing walls of the housing adjacent to said first wall, the other of the condensation discharge openings in the first chamber and the other of the condensation discharge openings in the second chamber being located in the same wall of the housing adjacent to said first wall and extending between said opposing walls; and a condensation discharge tray positioned inside the housing and adapted to collect condensation from the air-to-air plate heat exchanger and discharge it to one of the condensation discharge openings.

The provision of the condensation discharge tray in combination with the four specifically placed condensation discharge openings allows to attach the heat exchanger in a large number of different orientations in the building, in each case with a condensation discharge opening near or at a lowest point of the heat exchanger, such that, by means of gravity, the condensation can discharge from the housing. The provision of the condensation discharge tray in combination with the four specifically placed condensation discharge openings simplifies the installation of the heat exchanger. Typically, the ventilation system and in particular the heat exchanger is installed as one of the last systems during the construction of a residential building, i.e. after the provision of the other utilities, such as electricity, water pipes, heating, etc. This means that often only limited space is available in the technical room of the residential building. The provision of a heat exchanger that can be mounted in a large number of orientations then makes it easier to install the heat exchanger, depending on the space still available. In addition, it is avoided that a plurality of versions of the heat exchanger are necessary to achieve different orientations, which in turn avoids the risk of wrong orders.

In an embodiment not falling under the scope of the claims, the heat exchanger is configured to be attached to said wall of the building in any of the following positions: a ceiling position wherein said wall of the building is formed by a ceiling; a first vertical wall position wherein said wall of the building is formed by a wall and wherein the one of said opposing walls, located in the first chamber, is a bottom wall of the housing; a second vertical wall position wherein said wall of the building is formed by a wall and wherein the one of said opposing walls, located in the second chamber is a bottom wall of the housing; and a horizontal wall position wherein said wall of the building is formed by a wall and wherein said same wall is a bottom wall of the housing. The heat exchanger can therefore be used in more orientations compared to the heat exchanger disclosed in WO 2022/018021 A1.

In an embodiment not falling under the scope of the claims, in said first vertical wall position and said second vertical wall position, only the condensation discharge opening in the bottom wall of the housing is open, and, in said ceiling position and said horizontal wall position, only one of the two condensation discharge openings in said one wall is open. This avoids unnecessary openings in the housing, which reduces the risk of contamination, e.g. by moisture, dirt, insects, etc., of the interior of the housing.

In an embodiment not falling under the scope of the claims, the heat exchanger is configurable in a left-hand setting and a right-hand setting. This is especially advantageous when mounted horizontally on the wall or ceiling, because the left/right adjustment allows the heat exchanger to be adapted to the already installed pipes and the desired room forms the condensing side of the heat exchanger.

In an embodiment not falling under the scope of the claims, the configuration comprises entering a command into a control unit and/or opening/closing one or more of the discharge openings.

In an embodiment not falling under the scope of the claims, an electronic control unit is attached to a wall of the housing opposite said same wall. This is advantageous because in this way, input-output elements are easily accessible on the outside of the housing.

In an embodiment not falling under the scope of the claims, the condensation discharge tray comprises a first upright drip edge in the first chamber, said first drip edge configured to divert condensation around at least one of the drive units. This drip edge prevents (or at least reduces the chance) that condensate would enter the drive unit.

In an embodiment not falling under the scope of the claims, the condensation discharge tray comprises a second upright drip edge in the second chamber, wherein the first drip edge is configured to divert condensation around the first drive unit and wherein the second drip edge is configured to divert condensation around the second drive unit. Both drip edges prevent (or at least reduce the possibility) of condensation entering the drive units. The provision of two drip edges also contributes to the left/right configurability as condensation is typically only present in one of the two chambers.

In an embodiment not falling under the scope of the claims, the housing is symmetrical with respect to a centre plane perpendicular to said same wall.

In an embodiment not falling under the scope of the claims, the condensation discharge tray is symmetrical with respect to a first centre plane perpendicular to said same wall.

In an embodiment not falling under the scope of the claims, the condensation discharge tray is symmetrical about a second centre plane through said opposing walls.

Such embodiments have the advantage that it is not necessary to provide two different mirrored versions of the heat exchanger (i.e. the left/right versions), but that the same heat exchanger, due to this symmetry, can be used independently of the arrangement of the pipes already installed in a building. This simplifies installation and also reduces production costs.

It will be readily appreciated that, despite the presence of a plane of symmetry described above, there may be components that are not symmetrically arranged with respect to the plane of symmetry and are still located within either one of the chambers. For example, the control unit and/or a discharge pipe mounted on the housing should not be arranged symmetrically with respect to the plane of symmetry. However, this has no adverse effect on the installation, because the positioning of such components is not affected by the positioning of the pipes already installed in the building.

In an embodiment not falling under the scope of the claims, the first drive unit is located in the first chamber and the second drive unit is located in the second chamber. First of all, this contributes to the symmetry, present in the heat exchanger. It further avoids that, unlike an embodiment with both drive units in the same chamber, there are configurations wherein both drive units are exposed to condensation.

In an embodiment not falling under the scope of the claims, the first drive unit is located after the air-to-air plate heat exchanger on the first flow path and the second drive unit is located after the air-to-air plate heat exchanger on the second flow path. Although the drive units can also be located in front of the plate heat exchanger on their flow path, it is advantageous for the airflow to place them in front thereof such that air is drawn through the plate heat exchanger rather than blown through it.

In an embodiment not falling under the scope of the claims, the air-to-air plate heat exchanger operates on the basis of a cross flow. This constitutes a simple and efficient design.

An embodiment not falling under the scope of the claims relates to a ventilation system for a residential building, said ventilation system comprising a heat exchanger, said heat exchanger comprising: a beam-shaped housing wherein a first inlet, a second inlet, a first outlet, and a second outlet are provided, wherein the first inlet and the first outlet together are part of a first flow path and wherein the second inlet and second outlet together are part of a second flow path, wherein the first inlet comprises a first inlet opening in a first wall of the housing and a second inlet opening in a second wall of the housing, wherein the first wall and the second wall are adjacent to each other and wherein both inlet openings of the first inlet open into a first same internal volume inside the housing; an air-to-air plate heat exchanger inside the housing and provided with a plurality of first channels that are part of the first flow path and a plurality of second channels that are part of the second flow path; a first drive unit inside the housing and arranged for driving an airflow over the first flow path and a second drive unit inside the housing and arranged to drive an airflow over the second flow path; and a first filter unit, positioned between the first inlet and the first drive unit, wherein the first filter unit comprises a first filter and a second filter, adjacent to each other on one side, and form an angle with respect to each other, wherein a largest angle between the first filter and the second filter of the first filter unit is directed towards said first same internal volume.

The provision of two inlet openings in adjacent walls allows to connect pipes to the heat exchanger from mutually perpendicular directions. An advantage of this is that, for example, pipes from different indoor spaces can be connected directly to the inlet of the heat exchanger without a coupling piece.

Typically, especially in smaller residential buildings, only one of the two inlets will be used. In such a situation, it is still advantageous to provide two inlet openings. This makes it easier to fit the heat exchanger into existing pipes. In fact, the same advantages are achieved as the heat exchanger disclosed in WO 2022/018021 A1 without the disadvantages of the flexible, rotatable inlet pieces, such as less sealing, risk of damage, etc.

The use of an angled filter unit, i.e. a filter unit with two elements forming an angle with respect to each other, is furthermore advantageous for the air flow with a heat exchanger that is as compact as possible. It has been found that, when using a straight filter unit, the space between the filter unit and the first drive unit is too limited for a good flow. An angled filter unit provides a larger space between the filter and the drive unit such that strongly curved streamlines are avoided as much as possible.

In an embodiment not falling under the scope of the claims, the second inlet comprises a first inlet opening in a third wall of the housing and a second inlet opening in a fourth wall of the housing, wherein the third wall and the fourth wall are adjacent to each other and wherein both inlet openings of the second inlet open into a second same internal volume inside the housing, and wherein the heat exchanger further comprises a second filter unit positioned between the second inlet and the second drive unit, wherein the second filter unit comprises a first filter and a second filter that are adjacent to each other on one side and form a angle with respect to each other, wherein a largest angle between the first filter and the second filter of the second filter unit is directed towards said second same internal volume. In this embodiment, the second inlet also has the advantages of several connectable pipes and/or simple integration between existing pipes and/or good air flow with a compact design.

In an embodiment not falling under the scope of the claims, the first filter unit and the second filter unit are identical. This is beneficial for the symmetry of the heat exchanger and helps to avoid a mirrored version of the heat exchanger. In addition, it reduces production costs because separate stocks of filter units are not required.

In an embodiment not falling under the scope of the claims, said first wall and said third wall are the same and said second wall and said fourth wall are opposite each other. This is beneficial for the symmetry of the heat exchanger and helps to avoid a mirrored version of the heat exchanger.

In an embodiment not falling under the scope of the claims, the first same internal volume, the first filter unit, and the first inlet on the one hand, and the second same internal volume, the second filter unit, and the second inlet on the other hand, are symmetrical with respect to each other about a centre plane of the housing. This is beneficial for the symmetry of the heat exchanger and helps to avoid a mirrored version of the heat exchanger.

In an embodiment not falling under the scope of the claims, the first wall and the second wall form a substantially right angle, said angle having a bisector, wherein the first inlet opening and the second inlet opening are symmetrical with respect to the bisector and wherein a passage opening in a wall opposite the first filter unit is not symmetrical with respect to the bisector. As a result, there is a less curved flow path between one of the two inlet openings and the passage opening and a more curved flow path, wherein the airflow over the less curved flow path obviously passes more smoothly. This is advantageous since, in practice, typically one of the two input ports is used more than the other, which is then associated with the less curved flow path. It also allows the first drive unit to be positioned centrally with respect to a centreline of the heat exchanger without the need to match the drive unit dimension with the heat exchanger dimension, i.e. the drive unit can have the same size for different sizes of the housing.

In an embodiment not falling under the scope of the claims, the housing is configured to be attached via one of its walls to a wall in the building, wherein said first wall and said second wall each are adjacent to said one of its walls. Therefore, the inlet openings each have a normal direction that is parallel to the wall, such that the pipes also run parallel to the wall and can therefore be easily attached to the wall.

In an embodiment not falling under the scope of the claims, said largest angle between the first filter and the second filter is at least 100°, in particular at least 110° and more in particular at least 115°, wherein said largest angle between the first filter and the second filter is at most 150°, in particular at most 135° and more in particular at most 125°, and wherein said largest angle between the first filter and the second filter is preferably about 120°. Such an angle optimizes the placement of the filters relative to both the drive unit inlet opening and the inlet openings, and in particular leaves sufficient room for a smooth air flow with minimally curved flow paths.

In an embodiment not falling under the scope of the claims, each filter has a length, wherein the length of the first filter is smaller than the length of the second filter. As already described, in practice, one of the two inlet openings is typically used more than the other. The longest filter can be used between the most used inlet opening and the first drive unit such that the most expected airflow passes over the largest possible filter area.

In an embodiment not falling under the scope of the claims, the filter unit is configured to filter particles, such as sand, insects, hair, coarse dust, etc., from an air stream. In an embodiment, the filter unit is configured to additionally filter smaller particles, such as pollen or fine dust, from an air stream. In an embodiment, the filter unit comprises, or each filter is, an ISO coarse filter according to ISO 16890 standard. In another embodiment, the filter unit comprises, or each filter is, an ISO ePM10 filter according to ISO 16890 standard. In yet another embodiment, the filter unit comprises, or each filter is, an ISO ePM2.5 filter or an ISO ePM1 filter according to ISO 16890 standard, although this may result in a reduced airflow. Preferably, all filters of the same filter unit have the same ISO 16890 standard to avoid pressure differences over different filters. Typical materials used in a filter unit are polyester and/or polypropylene.

In an embodiment not falling under the scope of the claims, the first drive unit is located behind the air-to-air plate heat exchanger on the first flow path and the second drive unit is located behind the air-to-air plate heat exchanger on the second flow path. Although the drive units can also be located in front of the plate heat exchanger on their flow path, it is advantageous for the airflow to place them behind it, such that air is drawn through the plate heat exchanger rather than blown through it.

In an embodiment not falling under the scope of the claims, the air-to-air plate heat exchanger operates on the basis of a cross flow. This constitutes a simple and efficient design.

An embodiment not falling under the scope of the claims relates to a ventilation system for a residential building, said ventilation system comprising: a heat exchanger and a mounting bracket, configured for mounting the heat exchanger to a wall in the building, wherein the mounting bracket comprises: a flat wall, configured to be attached to said wall in the building; a first upright wall, extending from the flat wall and wherein a first engagement opening is provided; and a second upright wall, extending from the flat wall and located opposite the first upright wall and wherein a second engagement opening is provided, wherein the heat exchanger comprises: a beam-shaped housing wherein a first inlet, a second inlet, a first outlet, and a second outlet are provided, wherein the first inlet and the first outlet together are part of a first flow path and wherein the second inlet and the second outlet together are part of a second flow path, said housing being provided with a bottom wall facing the flat wall of the mounting bracket, a top wall opposite the bottom wall, a first pair of opposing side walls adjacent the bottom wall and a second pair of opposing side walls adjacent the bottom wall; and an air-to-air plate heat exchanger inside the housing and provided with a plurality of first channels that are part of the first flow path and a plurality of second channels that are part of the second flow path, wherein a first hook means is provided on a first wall of said first pair of opposing side walls and wherein a second hook means is provided on a second wall of said first pair of opposing side walls, wherein the first hook means is hooked through the first engagement opening and/or wherein the second hook means is hooked through the second engagement opening.

The provision of a U-shaped mounting bracket with grip openings in combination with hook means on the housing of the heat exchanger allows to attach the heat exchanger to both walls and ceilings in a building. Namely, the hook means engage in the engagement openings in the different orientations of the mounting bracket. This is advantageous compared to already known mounting means, such as, for example, disclosed in CN 211 400 139 U, which are only suitable for mounting on a ceiling.

An additional advantage of the mounting bracket is that it can be mounted in the technical room quite early in the construction of a residential building, especially before all other utilities have been installed. In this way, the space for the heat exchanger is immediately safeguarded without the need to install the heat exchanger itself. Because an early placement of a heat exchanger increases the risk of theft thereof.

In an embodiment not falling under the scope of the claims, the first hook means and the first engagement opening and/or the second hook means and the second engagement opening are each configured to continuously engage each other during a rotation of the hook means relative to its respective engagement opening through an angle of at least 60°, in particular at least 70° and more in particular at least 80°. This is advantageous with a ceiling mount. Because it is possible to first attach one side of the heat exchanger to the mounting bracket by attaching one of the hook means in the engagement opening. Subsequently, the other side of the heat exchanger can be rotated upwardly and attached. In this way, the relatively heavy heat exchanger (which weighs 30 kg, for example) can be mounted by one person, compared to direct ceiling mounting where several people are required. It also simplifies the maintenance of the heat exchanger that can remain hooked to the mounting bracket on one wall and is still easily accessible for maintenance.

In an embodiment not falling under the scope of the claims, the first hook means and/or the second hook means each have a U-shaped portion. This is an easy way to obtain the desired engagement over a rotation of 60° to 90°.

In an embodiment not falling under the scope of the claims, a shortest distance between the bottom wall of the housing and the flat wall of the mounting bracket near the first upright wall is larger than a shortest distance between the bottom wall of the housing and the flat wall of the mounting bracket near the second upright wall. This is advantageous with a ceiling mount because, in this way, the heat exchanger is installed at a slight angle, which benefits the discharge of condensation under the influence of gravity.

In an embodiment not falling under the scope of the claims, the heat exchanger further comprises a first securing means and/or a second securing means, wherein a securing means prevents a respective hook means from being released from the respective engagement opening. This increases safety and prevents (or at least reduces the risk of) the heat exchanger accidentally becoming detached from the mounting bracket.

In an embodiment not falling under the scope of the claims, the first upright wall and/or the second upright wall is provided at its end with a folded edge, said edge in particular delimiting a lower side of a respective engagement opening. Such a folded edge locally provides an L-shaped cross-section, which drastically increases the strength and thus reduces the risk of unwanted deformation of the engagement openings.

In an embodiment not falling under the scope of the claims, the mounting bracket and/or the first hook means and/or the second hook means are each formed from a metal plate. This is a simple production and ensures solid integrally formed elements.

In an embodiment not falling under the scope of the claims, the first hook means and/or the second hook means is attached to a respective wall of the housing by means of a U-shaped intermediate element, wherein the legs of a U-shaped intermediate element are connected to each other by means of a connecting element extending through a respective wall of the housing. For sufficient insulation of the heat exchanger, its housing is typically made of insulating materials, in particular plastic, such as expanded polypropylene (EPP) or expanded polystyrene (EPS), to which it is typically difficult to sufficiently firmly attach metal parts thereto. The U-shaped piece provides a large contact surface with the housing such that a firm connection is still possible.

In an embodiment not falling under the scope of the claims, the mounting bracket is symmetrical with respect to a centre plane between the upright walls and/or with respect to a centre plane perpendicular to the upright walls. This simplifies installation, as the orientation of the mounting bracket is irrelevant or less irrelevant.

In an embodiment not falling under the scope of the claims, the air-to-air plate heat exchanger operates on the basis of a cross flow. This constitutes a simple and efficient design.

In an embodiment not falling under the scope of the claims, the mounting bracket is further provided with a first tab and/or a second tab, located at a respective one of the first upright wall and the second upright wall, wherein each tab is configured for attachment thereto of a respective one of the first hook means and the second hook means and wherein one of the hook means that is not projecting through a respective engagement opening is connected to its respective tab. Such tabs make it easy to position opposing walls of the housing at a different distance from the wall, such that the heat exchanger is disposed at an angle. This can contribute to condensation discharge.

An embodiment not falling under the scope of the claims relates to a method for mounting the ventilation system as described to a ceiling in a building, said method comprising: attaching the mounting bracket to said ceiling; subsequently hooking the first hook means into the first engagement opening; subsequently rotating the heat exchanger to a substantially horizontal position; and subsequently attaching the second hook means to the mounting bracket. As already described above, this has the advantage that the mounting can be carried out by one person. In addition, the method is ergonomically less stressful because it is unnecessary to move the relatively heavy heat exchanger without support to near the ceiling.

In an embodiment not falling under the scope of the claims, subsequently attaching the second hook means to the mounting bracket comprises: hooking the second hook means into the second engagement opening, optionally by means of a horizontal displacement of the heat exchanger; or attaching the hook means to a tab of the mounting bracket. Using a horizontal shift is a simple way of allowing the second hook means to be rotated upwards to a position between the engagement openings and then extended to a position through the second engagement opening and then hooked without complex mechanical means that fold away, for example. The use of a fixed connection with the tab allows a heat exchanger to be set up in a simple manner. The fixed attachment also serves as a safeguard that increases safety.

In an embodiment not falling under the scope of the claims, the method further comprises applying a securing means for securing the first hook means in the first engagement opening. This increases the safety and prevents (or at least reduces the risk of) the heat exchanger accidentally becoming detached from the mounting bracket.

According to an aspect, the present invention further relates to a residential home comprising the ventilation system as described above.

According to an aspect, the present invention further relates to the use of the ventilation system as described above for a residential mechanical ventilation with heat recovery (MVHR) application, particularly for controlling heat and/or humidity in an indoor space of a building.

It will be readily appreciated that, as will also appear from the further description hereinafter, the invention identified above and the various embodiments (including any optional features indicated) are not separate elements, but, on the contrary, that these various elements can be mutually combined with each other to obtain other embodiments than those already described, which embodiments also are part of the present invention which is defined by the scope of the appending claims.

### Brief description of the drawings

The invention will hereinafter be explained in further detail with reference to the following description and the accompanying drawings.
Figure 1 shows a perspective view of a heat exchanger according to the present invention.
Figure 2 shows a perspective view of a heat exchanger according to the present invention with a number of components removed.
Figure 3 shows a perspective view of a heat exchanger according to the present invention with a number of components removed.
Figure 4 shows a top view of Figure 3.
Figure 5 shows the same view as Figure 4 but with the valves arranged in the heat exchanger.
Figure 6 shows an exploded view of a heat exchanger according to the present invention with a number of components removed.
Figure 7 shows an exploded view of a heat exchanger according to the present invention.
Figure 8 shows a perspective view of the plate heat exchangers with attached valves used in a heat exchanger according to the present invention.
Figure 9 shows a perspective view of the valves used in a heat exchanger according to the present invention.
Figure 10 shows a perspective view of the condensation discharge tray used in a heat exchanger according to the present invention.
Figure 11 shows a step in mounting a heat exchanger according to the present invention to a ceiling via a mounting bracket.
Figure 12 shows a detail of Figure 11.
Figure 13 shows a perspective view of a heat exchanger according to the present invention, mounted to a ceiling via the mounting bracket.
Figure 14 shows a side view of Figure 13.
Figures 15A and 15B show a sectional detail of the right and left mounting of a heat exchanger according to the present invention to the mounting bracket, respectively.
Figure 16 shows a schematic representation of a residential building comprising a ventilation system with a heat exchanger according to the present invention.
Figure 17 shows a section through a heat exchanger according to the present invention attached to a ceiling via a mounting bracket.

### Embodiments of the Invention

The present invention will be described below with reference to specific embodiments and with reference to specific drawings, but the invention is not limited thereto and is defined only by the claims. The drawings shown here are only schematic representations and are not limitative. In the drawings, the dimensions of certain parts may be enlarged, which means that the parts in question are not shown to scale, and this for illustrative purposes only. The dimensions and relative dimensions do not necessarily correspond to actual practical embodiments of the invention.

In addition, terms such as "first", "second", "third", and the like are used in the description and in the claims to distinguish between similar elements and not necessarily to indicate a sequential or chronological order. The terms in question are interchangeable in appropriate circumstances, and the embodiments of the invention may operate in different orders than those described or illustrated herein.

In addition, terms such as "top", "bottom", "above", "below", and the like are used in the description and in the claims for descriptive purposes. The terms so used are interchangeable in appropriate circumstances, and the embodiments of the invention may operate in orientations other than those described or illustrated herein.

The term "comprising" and derivative terms, as used in the claims, should and should not be construed as being limited to the means set forth in each case thereafter; the term does not exclude other elements or steps. The term should be interpreted as specifying the listed properties, integers, steps, or components referred to, without, however, excluding the presence or addition of one or more additional properties, integers, steps, or components, or groups thereof. The scope of an expression such as "a device comprising the means A and B" is therefore not limited only to devices consisting purely of components A and B. What is meant, on the contrary, is that, for the purposes of the present invention, the only relevant components are A and B.

The term "substantially" includes variations of +/- 10% or less, preferably +/-5% or less, more preferably +/-1% or less, and more preferably +/-0.1% or less, of the specified state, insofar as the variations are appropriate to function in the present invention. It is to be understood that the term "substantially A" is intended to include "A".

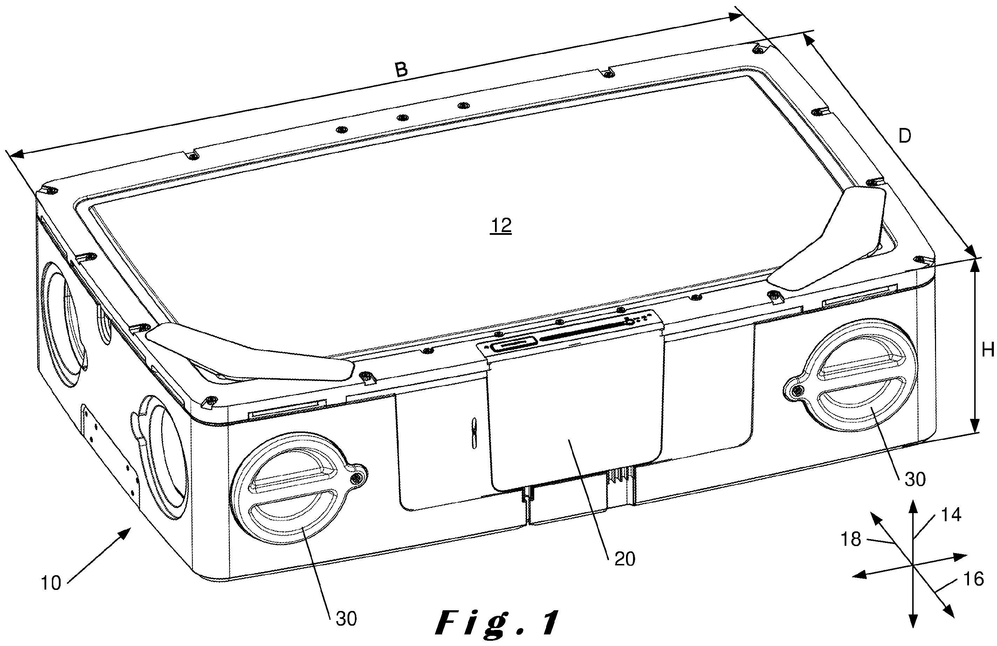

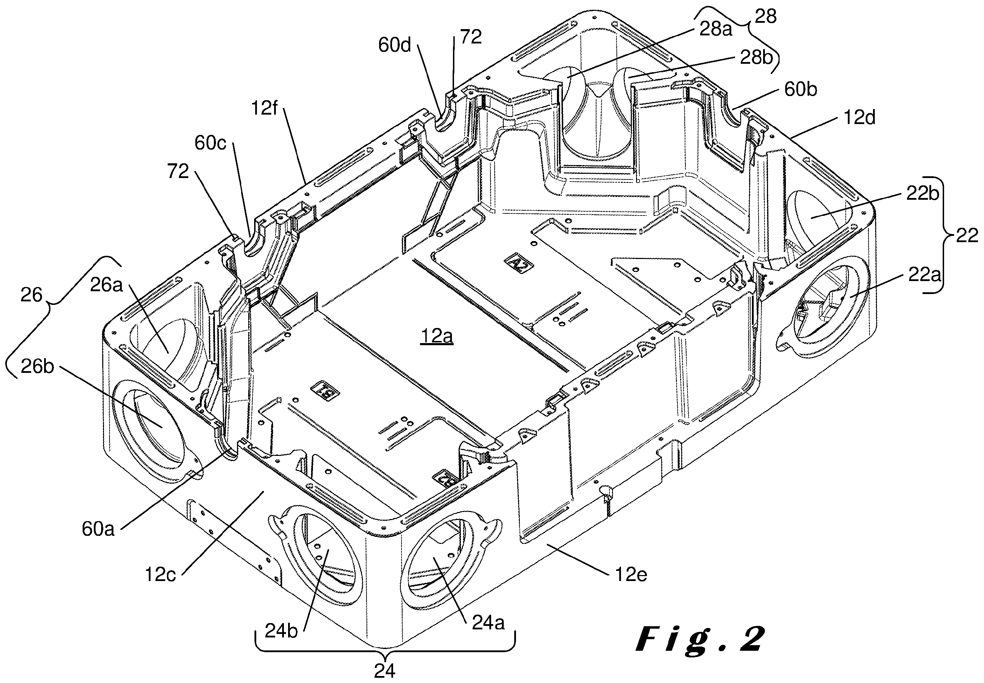

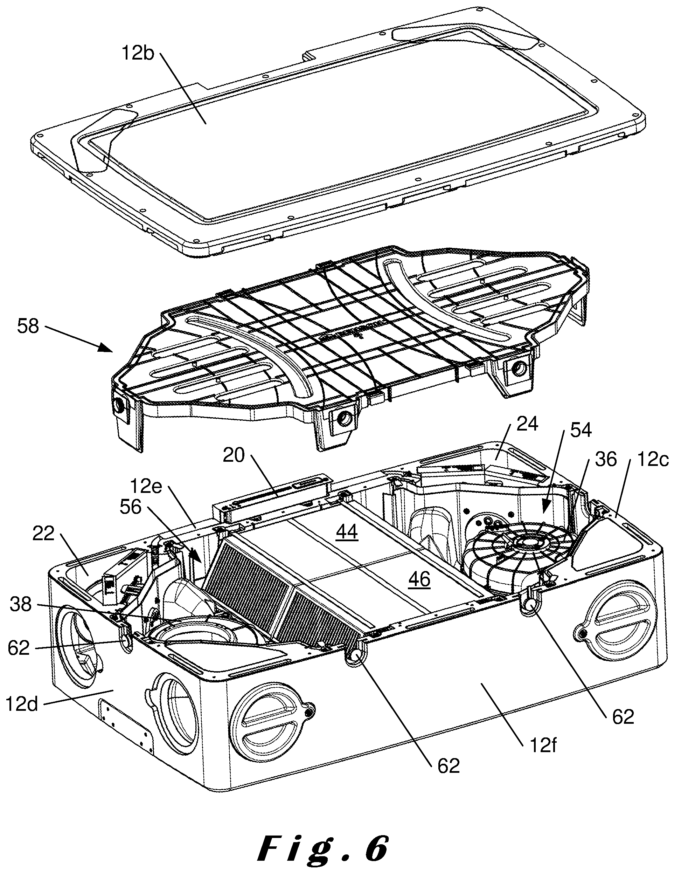

Figure 1 shows a perspective view of a heat exchanger 10 according to the present invention. The heat exchanger 10 comprises a beam-like housing 12 comprising a bottom wall 12a, a top wall 12b, a first short side wall 12c, a second short side wall 12d, a first long side wall 12e, and a second long side wall 12f. The various walls are best shown in Figures 2 and 6. The beam-shaped housing 12 has a width B, a height H and a depth D. The height H is measured as the distance between the bottom wall 12a and the top wall 12b in the height direction 14; the width B is measured as the distance between short side walls 12c, 12d in the width direction 16; and the depth D is measured as the distance between the long side walls 12e, 12f in the depth direction 18. The three directions 14, 16, 18 are substantially perpendicular to each other.

In an embodiment, the height H is typically between 150 mm and 600 mm. In particular, the height H is at least 200 mm and more in particular at least 250 mm. In particular, the height H is at most 500 mm and more in particular at most 400 mm. In the illustrated embodiment, the height H is approximately 300 mm.

In an embodiment, the depth D is typically between 400 mm and 1100 mm. In particular, the depth D is at least 500 mm, more in particular at least 600 mm and most in particular at least 700 mm. In particular, the depth D is at most 1000 mm, more in particular at most 900 mm and most in particular at most 800 mm. In the illustrated embodiment, the height H is approximately 745 mm.

In an embodiment, the width B is typically between 600 mm and 1700 mm. In particular, the width B is at least 800 mm, more in particular at least 1000 mm and most in particular at least 1100 mm. In particular, the width B is at most 1500 mm, more in particular at most 1300 mm and most in particular at most 1200 mm. In the illustrated embodiment, the height H is approximately 1188 mm.

In the illustrated embodiment, the housing 12 is made of expanded polypropylene (EPP). However, other insulating materials, such as expanded polystyrene (EPS), are also possible. To reduce weight, avoid costs, simplify the design, etc., no additional metal frame is provided. In other words, the housing 12 is preferably manufactured substantially entirely from insulating materials, in particular plastic, such as EPP or EPS. The use of insulating plastic also allows to manufacture the housing in whole or in part via injection moulding.

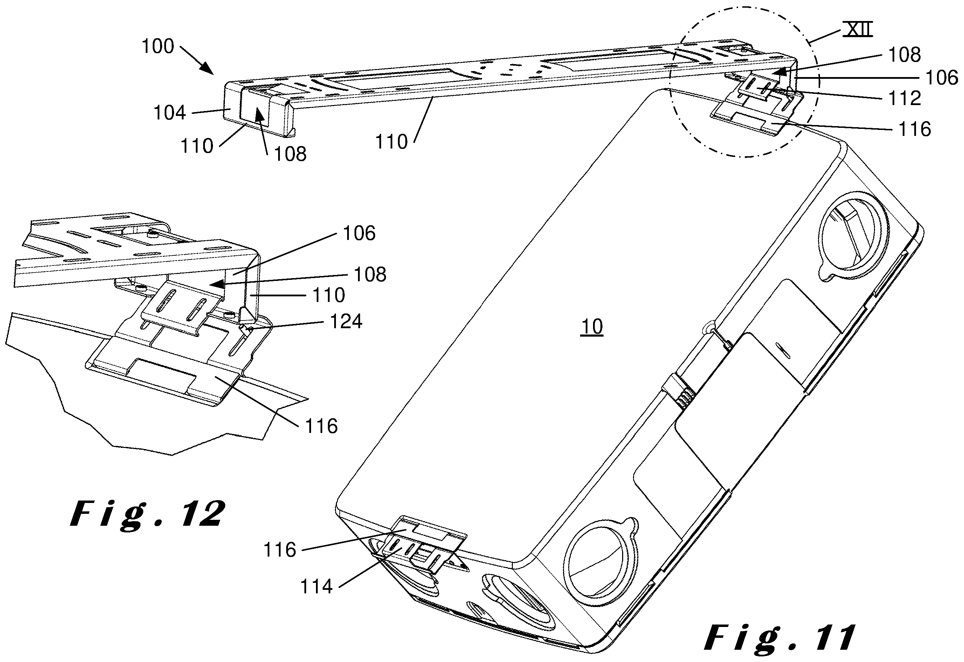

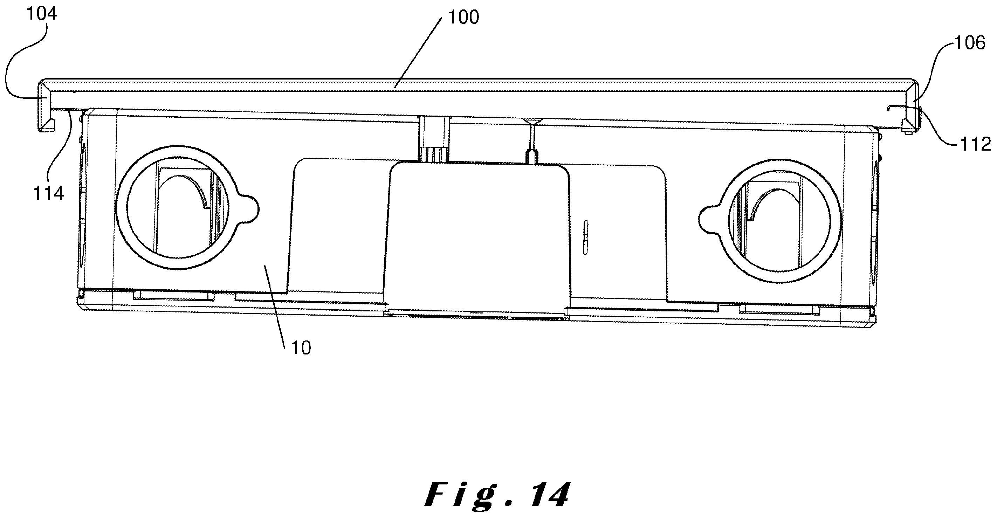

In use, the heat exchanger 10 is attached to a wall in a residential building with the bottom wall 12a facing the wall. The wall of the building can be a ceiling of the building as well as a wall of the building. The ceiling mount is further described with reference to Figures 11 to 15B. In case of a wall mount, the heat exchanger can be placed in three different orientations, i.e. a first vertical orientation wherein the first short side wall 12c is lower than the second short side wall 12d, a second vertical orientation wherein the heat exchanger 10 is rotated substantially 180° from the first vertical orientation such that the first short side wall 12c is higher than the second short side wall 12d, and a horizontal orientation wherein the first long side wall 12e is higher than the second long side wall 12f.

The heat exchanger 10 further comprises an electronic control module 20. In the illustrated embodiment, it is arranged in the first long side wall 12e. The electronic control module 20 serves to control and monitor the heat exchanger 10 and typically also includes input means and output means that allow to adjust the setting according to the wishes of a user. The electronic control module 20 comprises the necessary hardware (e.g. a memory, a processor, display, communication means, etc.) and/or software to perform the desired functionality. The necessary means (e.g. cables) are also provided inside the housing 12 to connect the electronic control module 20 to the internal components of the heat exchanger 10.

In an embodiment, the electronic control module 20 is provided as a separate module and can be removed from the first long side wall 12e, if desired. This allows, for example, to install the electronic control module 20 on the second long side wall 12f. In certain situations, this can prevent the electronic control module 20 from facing a wall in the residential building, for example if, due to the presence of existing piping, the heat exchanger 10 has to be placed in a vertical orientation in a corner of the residential building.

In the illustrated embodiment, the housing comprises eight openings in the side walls 12c-12f, which may or may not be sealed with a removable seal 30. The various openings are indicated in Figure 2 and comprise: a first inlet opening 22a, a second inlet opening 22b, a third inlet opening 24a, a fourth inlet opening 24b, a first outlet opening 26a, a second outlet opening 26b, a third outlet opening 28a, and a fourth outlet opening 28b. The inlet openings 22a, 22b together form a first inlet 22; the inlet openings 24a, 24b together form a second inlet 24; the outlet openings 26a, 26b together form a first outlet 26; and the outlet openings 28a, 28b together form a second outlet 28.

The provision of two openings per inlet/outlet is an easy way to connect a plurality of pipes to the heat exchanger 10 without the need for separate nodes. In addition, because both openings of an inlet/outlet are mutually perpendicular, it simplifies the placement of pipes in the technical area of the residential building. These can, for example, be placed in mutually perpendicular directions. It is also possible to provide only one opening in housing 12 per inlet/outlet.

In an embodiment, inlet 22 is intended as an inlet for outside air; inlet 24 is intended as an inlet for indoor air (i.e. air from an indoor space of a residential building); outlet 26 is intended as an outlet to an indoor space of a residential building; and outlet 28 is intended as an outlet to the outside environment. This functionality is reversible (i.e. a reversal of the functionality of inlets 22, 24, on the one hand, and a reversal of the functionality of outlets 26, 28, on the other hand), if desired, and can, for example, be adjustable by means of the electronic control module 20. In certain embodiments, is it also possible to switch the functionality of inlets and outlets (e.g. openings 22a, 22b that serve as outlet instead of openings 26a, 26b). Optionally, this can also be adjustable by means of the electronic control module 20.

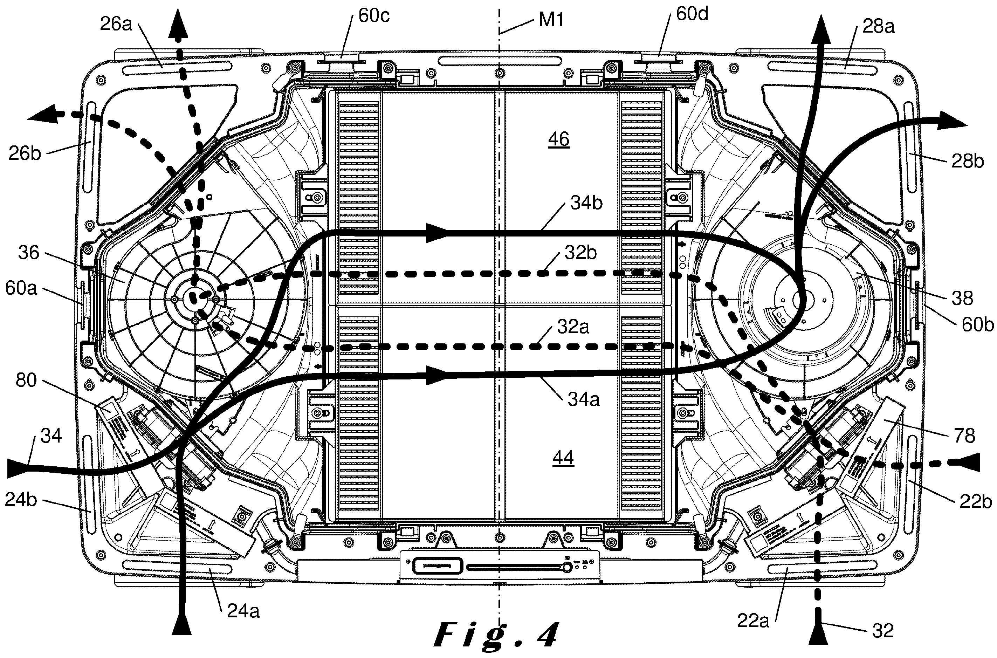

In the illustrated embodiment, there are two flow paths running through the heat exchanger 10 extending between the inlets 22, 24 and outlets 26, 28. The flow paths 32, 34 are indicated schematically in Figure 4. The first flow path 32 runs between the inlet 22 and the outlet 26 and the second flow path 34 runs between inlet 24 and outlet 28. The flow paths 32, 34 are further described in more detail.

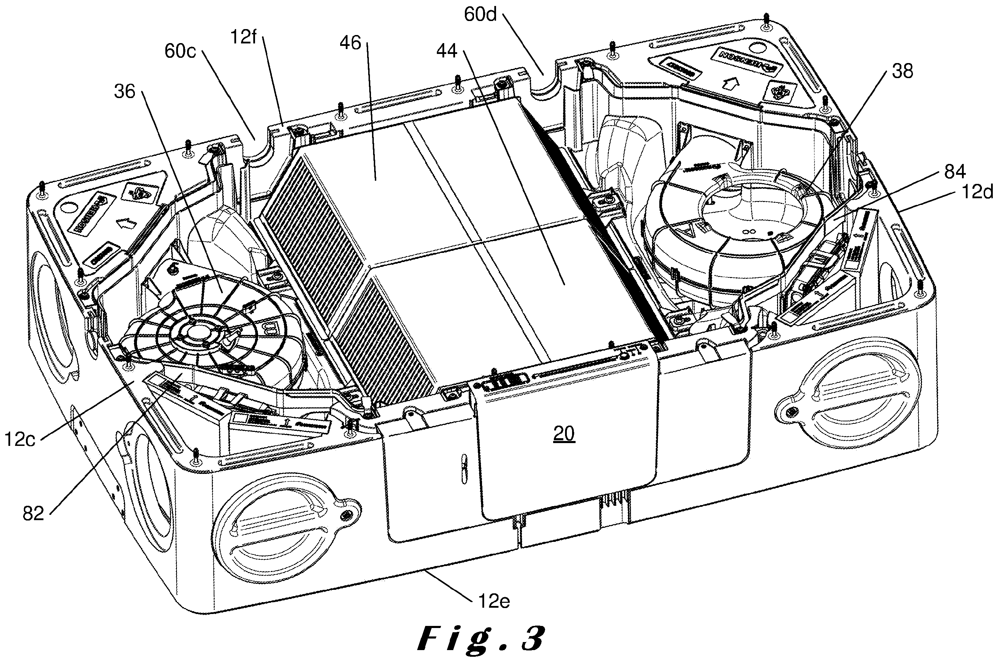

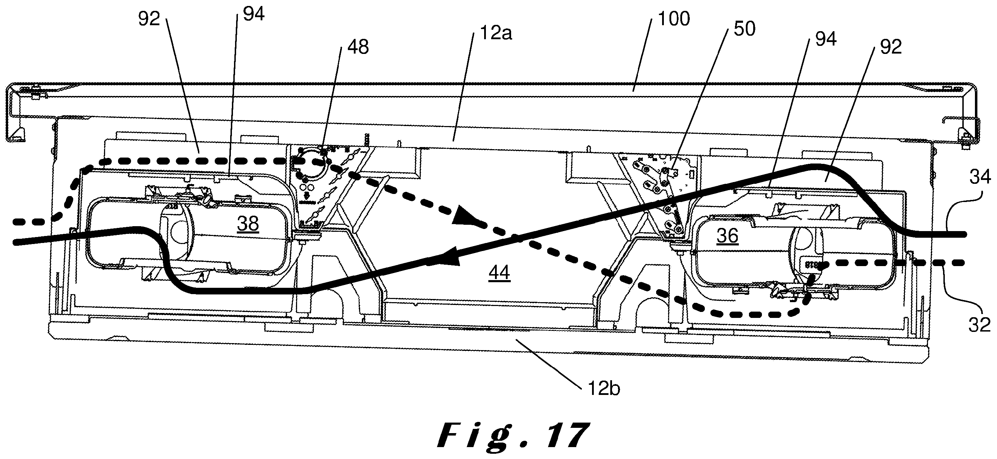

Figures 3 to 5 show some of the internal components of the heat exchanger 10. The heat exchanger 10 comprises a first drive unit 36 and a second drive unit 38. The first drive unit 36 is located on the first flow path 32 and the second drive unit 38 is located on the second flow path 34. Each drive unit 36, 38 serves to drive an airflow over its respective flow path 32, 34. The flow paths 32, 34 are also shown in the cross-section of Figure 17.

In the illustrated embodiment, each drive unit 36, 38 comprises a fan, in particular a centrifugal fan. If desired, each drive unit 36, 38 may also include several fans, in particular centrifugal fans. The drive units 36, 38 are arranged on opposite sides of the heat exchanger 10. In the illustrated embodiment, the drive units 36, 38 are placed mirror-symmetrically with respect to a centre plane M1 of the heat exchanger 10, meaning that the space wherein each drive unit 36, 38 is placed, is symmetrical, but not necessary that the internal components of each drive unit are symmetrical. In the illustrated embodiment, the first drive unit 36 is placed inverted relative to the second drive unit 38 in the height direction 14. Preferably, the drive units 36, 38 are identical to each other. This reduces the necessary storage of parts and simplifies the assembly of the heat exchanger 10.

In an embodiment, each drive unit 36, 38 comprises a (centrifugal) fan mounted in a spiral housing. A spiral housing allows the centrifugal fan to generate a higher air pressure. In an embodiment, each (centrifugal) fan comprises several fan blades that are attached to a central shaft extending in the height direction 14, or to a central ring extending in a plane orthogonal to the height direction 14. The fan blades are typically evenly distributed over the entire circumference of the central axis or ring. The fan blades may be straight radial or curved (for example, curved forward or, preferably, curved backward) blades.

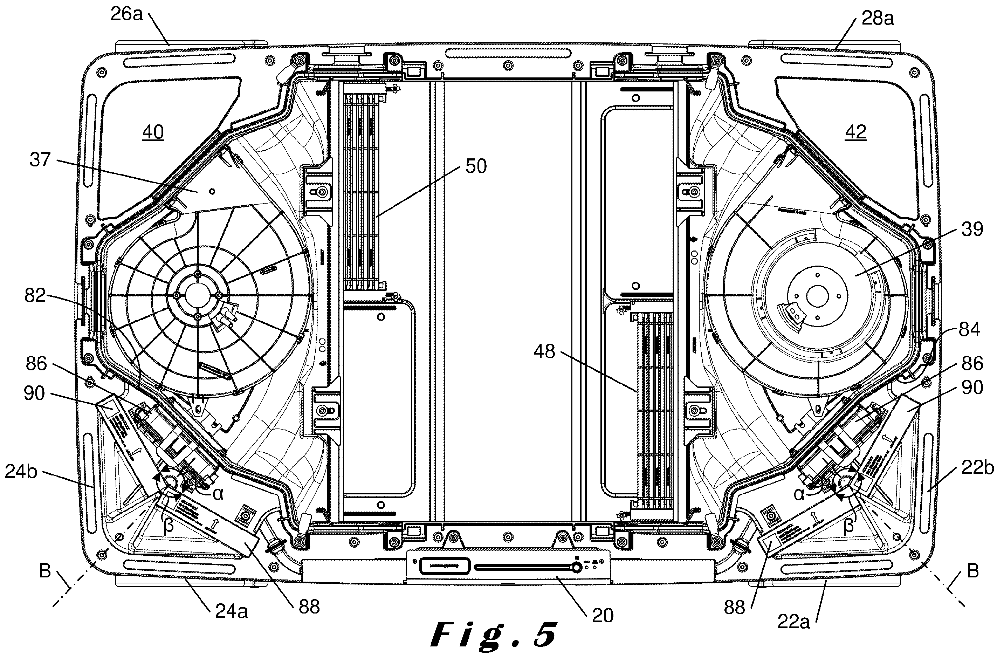

In an embodiment, each spiral housing comprises a body having a maximum housing diameter and a maximum axial housing width, a housing inlet and a housing outlet. The main portion of the housing surrounds the (centrifugal) fan to define a circumferential air conduction space. The axial housing width is typically perpendicular to the housing diameter. The housing inlet is formed by an opening alongside the fan in the axial direction and the housing outlet is formed by an opening alongside the fan in the radial direction. For simplicity, the housing outlet is indicated in Figure 5 on the first drive unit 36 with numeral 37 and the housing inlet is indicated in Figure 5 on the second drive unit 38 with numeral 39. The housing outlet of the first drive unit 36 is directly connected to a sealed internal space 40, of which outlet openings 26a, 26b also are a part thereof. The housing outlet of the second drive unit 38 is directly connected to a sealed internal space 42 which outlet openings 28a, 28b are also a part thereof.

The ratio between the maximum housing diameter and the maximum axial housing width is typically between 10:10 and 35:10, in particular between 15:10 and 30:10, and more in particular between 20:10 and 25:10. Such housings are advantageous because the housing is relatively flat and thus enables a compact heat exchanger 10. In an embodiment, the maximum diameter of the housing is between 200 mm and 550 mm and in particular between 250 mm and 400 mm.

The fan blades have a maximum axial blade width and a maximum radial blade length. The ratio between the axial blade width and the maximum axial housing width is typically between 2:10 and 8:10 and in particular between 3:10 and 6:10. Furthermore, there is a radial distance between the inner surface of the housing main portion and a radial end of each fan blade. A ratio between this radial distance and the maximum radial blade length is typically between 1:20 and 10:20 and in particular between 1:20 and 5:20. These specific proportions ensure optimum working conditions for a spiral housing with a maximum diameter of 350 mm, in particular a maximum of 300 mm.

In an embodiment, each drive unit 36, 38 can displace an air volume between 200 and 500 m³/h and in particular between 250 and 350 m³/h. In an embodiment, each drive unit 36, 38 has a power between 0.1 and 0.4 Wh/m³ (Watt hours per cubic meter), preferably between 0.15 and 0.3 Wh/m³.

In the illustrated embodiment, the heat exchanger 10 further comprises a first air-to-air plate heat exchanger 44 and a second air-to-air plate heat exchanger 46 in a parallel configuration. Air-to-air plate heat exchangers are known per se and details thereof are assumed to be known by the skilled person. A plurality of channels extend through each air-to-air plate heat exchanger 44, 46, i.e. one channel between any two successive plates. Each channel is part of one of the flow paths 32, 34. In the illustrated embodiment, the air-to-air plate heat exchangers 44, 46 operate on a cross-flow basis for simplicity and efficiency thereof, but other operating principles are possible. Due to the parallel configuration of the air-to-air plate heat exchangers 44, 46, the first flow path 32 comprises a first parallel portion 32a passing through the first air-to-air plate heat exchanger 44 and a second parallel portion 32b passing through the second air-to-air plate heat exchanger 46 and the same for the second flow path 34 with a first parallel section 34a through the first air-to-air plate heat exchanger 44 and a second parallel section 34b through the second air-to-air plate heat exchanger 46.

Preferably, the first air-to-air plate heat exchanger 44 is a heat recovery ventilation unit (HRV unit) and the second air-to-air plate heat exchanger 46 is an energy recovery ventilation unit (ERV unit). The HRV unit 44 and the ERV unit 46 are known per se and details thereof are assumed to be known by the skilled person. In other embodiments, each of the air-to-air plate heat exchanger 44, 46 forms an HRV unit or an ERV unit.

In the illustrated embodiment, the heat exchanger 10 further comprises a first valve 48 and a second valve 50. The first valve 48 is placed on the first flow path 32 on the inlet side of the first air-to-air plate heat exchanger 44. The second valve 50 is placed on the second flow path 34 on the inlet side of the second air-to-air plate heat exchanger 46. In the illustrated embodiment, the valves 48, 50 are located on their respective flow path 32, 34 in front of the air-to-air plate heat exchangers 44, 46. This typically has a better throughflow and/or fewer pressure problems compared to valves behind the air-to-air plate heat exchangers.

Each valve 48, 50 serves to control the air flow along its flow path and is at least adjustable between at least an open position, a closed position and an intermediate position. As used herein, the term "closed position of a valve" refers to the position wherein the valve does not allow a throughflow. As used herein, the term "open position of a valve" refers to the position wherein the valve allows a maximum throughflow. As used herein, the term "intermediate position of a valve" refers to the position wherein the valve permits a throughflow that is between the maximum throughflow and no throughflow. When controlling the valves, legislation regarding throughflow must also be taken into account. In the context of a heat exchanger, it is typically not permitted by law to completely close all valves together. A minimum cross section (e.g. 10% or 30%) is always required over the heat exchanger, e.g. to enable measurements of carbon dioxide, flow rate and/or pressure. Therefore, there are also versions of the heat exchanger wherein one or more valves may not be closed. In such an embodiment, the "closed position of a valve" refers to the position wherein the valve allows the minimum throughflow, required by law.

In the illustrated embodiment, there are two air-to-air plate heat exchangers 44, 46, each of which has two inlet sides, i.e. a first inlet side on the first flow path 32 and a second inlet side on the second flow path 34. Two valves 48, 50 are also provided. In other words, there are two unclosed inlet sides. This is advantageous because there will always be a minimum flow over the heat exchanger 10, as required by law. Because the valves 48, 50 are provided on different plate heat exchangers 44, 46, i.e. both valves are not provided on the same plate heat exchanger, it is possible to obtain an effective bypass without the need for separate bypass channels. The following is a non-exhaustive overview of possible valve configurations for the heat exchanger 10 shown:
- an open configuration wherein each valve is located in its open position;
- a first control configuration wherein valve 48 is located in its open position and valve 50 is located in its closed position - thus, there is a maximum flow over the first air-to-air plate heat exchanger 44 and a unidirectional flow over the second air-to-air plate heat exchanger 46;
- a second control configuration wherein valve 48 is located in its closed position and valve 50 is located in its open position - i.e. there is a unidirectional flow over the first air-to-air plate heat exchanger 44 and a maximum flow over the second air-to-air plate heat exchanger 46; and
- a bypass configuration wherein each valve is located in its closed position - thus there is a unidirectional flow over each plate heat exchanger 44, 46;

It will be readily appreciated that embodiments are also possible wherein the plate heat exchangers 44, 46 are replaced by a single plate heat exchanger which has substantially the same size as both together. In such an embodiment, crosswise placed valves can still be used to enable a bypass over the plate heat exchanger. However, it is mechanically difficult to connect the valves sufficiently airtight to the one plate heat exchanger. It is, of course, also possible to use only a single plate heat exchanger in combination with separate bypasses, although this will lead to a less compact heat exchanger.

In an embodiment wherein the first air-to-air plate heat exchanger 44 is an HRV unit and the second air-to-air plate heat exchanger 46 is an ERV unit, it is further advantageous to provide an additional valve on the first flow path 32 on the inlet side of the ERV unit, and to provide an additional valve on the second flow path 34 on the inlet side of the HRV unit. In other words, four valves are then provided, namely one valve for each inlet side of the HRV unit and the ERV unit. Such an embodiment is not shown, but it is advantageous. The following is a non-exhaustive overview of possible valve configurations for such a heat exchanger 10:
- an open configuration wherein each valve is located in its open position;
- a closed configuration wherein each valve is located in its closed position (preferably taking into account the minimum flow required by law);
- an energy recovery configuration wherein the valves on the inlet sides of the HRV unit 44 are located in their closed position and the valves on the inlet sides of the ERV unit 46 are not located in their closed position - thus, there is only a flow over the ERV unit 46;
- a heat recovery configuration wherein the valves on the inlet sides of the HRV unit 44 are not located in their closed position and the valves on the inlet sides of the ERV unit 46 are located in their closed position - thus, there is only a flow over the HRV unit 46;
- a first control configuration wherein the valves on the inlet sides of the HRV unit 44 are located in their open position and the valves on the inlet sides of the ERV unit 46 are located in their intermediate position - thus, there is a maximum flow over the HRV unit 44 and a more restricted flow over the ERV unit 46;
- a second control configuration wherein the valves on the inlet sides of the HRV unit 44 are located in their intermediate position and the valves on the inlet sides of the ERV unit 46 are located in their open position - thus, there is a maximum flow over the ERV unit 46 and a more restricted flow over the HRV unit 44;
- a third control configuration wherein all valves are located in their intermediate position - thus, there is a limited flow over the HRV unit 44 and the ERV unit 46; and
- a bypass configuration wherein only one of the valves on the inlet sides of the HRV unit 44 is located in its closed position and only one of the valves on the inlet sides of the ERV unit 46 is located in its closed position - thus, there is a unidirectional flow over the HRV unit 44 and the ERV unit 46.

These different valve configurations allow to use such a heat exchanger 10 in a plurality of situations, whereby an optimum ventilation with an accurate control of the temperature and/or the degree of humidity and/or the carbon dioxide content is achieved. This also contributes to the energy efficiency of the heat exchanger 10. Below is a brief overview of a number of different scenarios. In the table below, "T" stands for temperature and "V" for absolute humidity. M₁ and M₂ indicate different control strategies, wherein M₁ refers to an indoor climate that is as comfortable as possible and where M₂ refers to an energy efficient use of the heat exchanger 10, in particular in combination with other means of air conditioning, such as a heater, an air conditioner, a humidifier, a dehumidifier, etc. In addition to the control strategy, various objectives are also possible with the heat exchanger 10. Three objectives are included in the table, namely ventilation, cooling and humidification of the air. ERV and HRV indicate which of the units 44, 46 in the heat exchanger 10 is mainly used as a function of the weather conditions, the control strategy required and the desired purpose.

| | | Ventilation | | Cooling | Humidification |
|---|---|---|---|---|---|
| | | M₁ | M₂ | M₂ | M₂ |
| T_{outside} < T_{inside} | V_{outside} < V_{inside} | ERV | HRV | | ERV |
| | V_{outsid}e > V_{inside} | HRV | HRV | | HRV |
| T_{outside} > T_{inside} | V_{outside} < V_{inside} | HRV | | HRV | |
| | V_{outside} > V_{inside} | ERV | | ERV | |

The table above illustrates a number of different valve configurations. For example, column "ventilation/M2" shows that, when the outside temperature is cold, it is better to use the HRV unit because it recovers more heat and therefore less heating is required by an external heating system. The column "cooling/M2" is just the other way around. At a warm outside temperature, the HRV unit recovers the heat better than the ERV unit. In this way, the air conditioner has a lower consumption.

The electronic control module 20 is preferably configured to independently control each of the valves to the desired position, the drive units 36, 38 (e.g. fan speed), and/or other components (e.g. flow controllers). The electronic control module 20 typically comprises a processor that outputs control signals to the components to be controlled. The electronic control module 20 also comprises a memory on which, e.g., a list of pre-set configurations and the associated control signals are stored. The electronic control module 20 may also be in communication with one or more external sensors (not shown), e.g. a thermometer, a carbon dioxide meter, a hygrometer, etc. These sensors can measure the outside air and/or the air inside (a room in) the residential building. On the basis of the information obtained and/or external input from the user, the electronic control module 20 can transmit the necessary control signals.

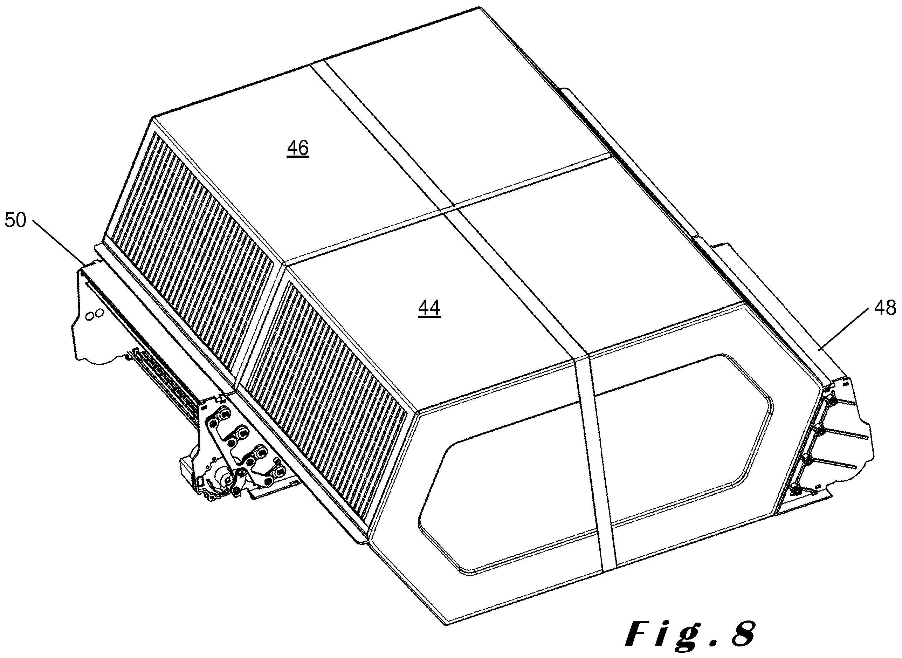

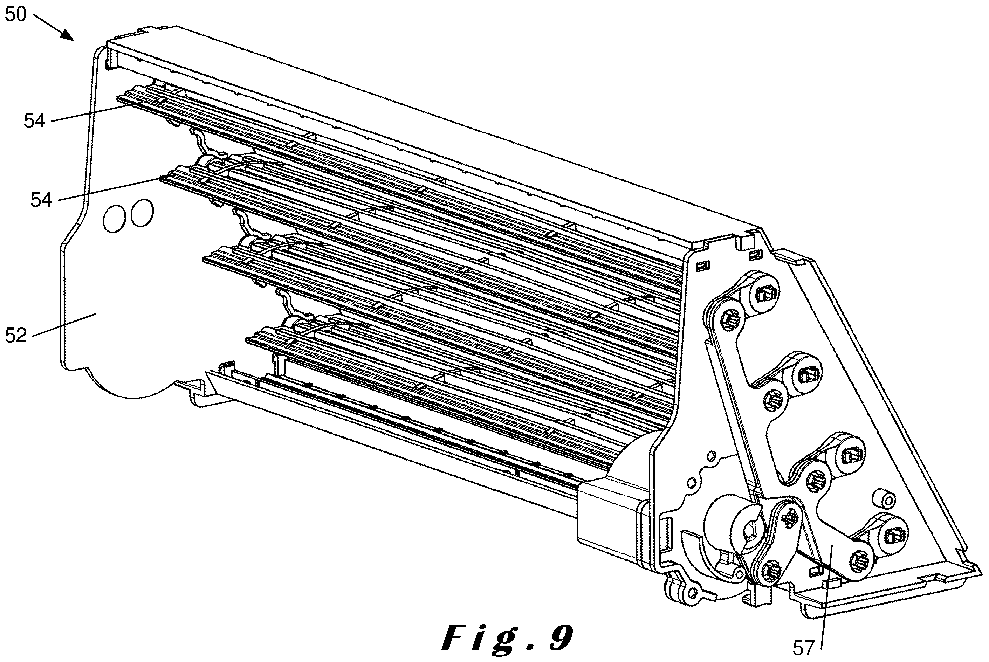

Figure 9 illustrates one of the valves 48, 50 in more detail and Figure 8 shows a perspective view of the air-to-air plate heat exchangers 44, 46 with the valves 48, 50 mounted thereon. Each valve includes a frame 52 on which four vanes 54 are mounted. Of course, there may also be a different number of vanes, for example between two and ten and preferably between three and six vanes. The advantage of a plurality of vanes over a valve with only one vane is that the space required for the valve is reduced, because individually rotatable vanes require less space to rotate freely about their axis than a single large vane. The vanes 54 are pivotally mounted on the frame 52 between an open position and a closed position. The direction of rotation of the vanes can be clockwise or counterclockwise and can also be different for other vanes on the same frame.

Figure 9 illustrates the open position of the vanes 54. The vanes 54 are herein substantially parallel to each other with a maximum spacing between them. The shape of the vanes 54 is determined, among other things, to generate as little resistance as possible to the air flow through the plate heat exchangers 44, 46 in the open position and as much resistance as possible in the closed position. This can be achieved by varying the radial dimension of a vane 54 from its axis of rotation to its surface as a function of the angular direction, i.e. the azimuth angle, within a plane perpendicular to said axis of rotation (i.e. in cross-section), e.g. an elongated thin vane. Namely, this results in angular directions with maximum radial dimension and angular directions with minimal radial dimension. As a result, the closed position of a vane is provided by the maximum radial dimension, extending in a direction perpendicular to the airflow direction, while the open position of the vane is provided by the minimum radial dimension, extending in a direction perpendicular to the airflow direction.

In an embodiment, each vane 54 comprises a first angular direction having a first maximum radial dimension and a second angular direction having a second maximum radial dimension, wherein the first angular direction and the second angular direction differ by 180°, i.e., the first maximum radial dimension and the second maximum radial dimension are diametrically opposed with respect to the axis of rotation of the vane. A radial dimension of the vane from its axis of rotation to its surface may additionally vary as a function of axial location along said axis of rotation. For example, angular directions of maximum radial dimension and angular directions of minimum radial dimension may alternate along the axial direction of the vane. The specific configuration of each vane 54 may be different from the other vanes. In an embodiment, a vane 54 has a lentil-shaped or teardrop-shaped cross-section. This ensures sufficient rigidity, close to the axis of rotation, preventing unwanted bending. Such shapes are also advantageous in terms of airflow resistance and sound generating capacity in the open position.

In an embodiment, each vane 54 comprises at its radially outer location a first structural formation and at its opposite radially outer location a second structural formation, complementary to the first structural configuration. The first and second structural formations are configured to engage corresponding first and/or second structural formations of an immediately adjacent vane 54, preferably forming a particularly airtight seal in the closed position.

The design of the frame 54 is mainly determined as a function of the design of the inlet side of the air-to-air plate heat exchangers 44, 46. In the illustrated embodiment, the frame comprises a rectangular part that is disposed at an angle and thus fits closely against the circumferential wall of the air-to-air plate heat exchangers 44, 46 on the inlet side thereof. This helps to provide an airtight seal between the frame 54 and the air-to-air plate heat exchangers 44, 46.

In an embodiment, at least a portion of each vane 54 is made of an elastomeric material. This improves the sealing function between adjacent vanes 54 that engage each other. In particular, each vane 54 may comprise or consist of an elastomeric material at its radially outer locations. This has the advantage that the radially outer locations of the vane 54 will first contact the adjacent vane 54 and then elastically deform, creating a significantly tighter seal between adjacent vanes 54. Such an elastomer may also be provided on the frame 52 to improve the airtightness with the air-to-air plate heat exchangers 44, 46.

In the illustrated embodiment, each vane 54 is pivotally mounted on the frame 52 between its open position and its closed position. Furthermore, it is also possible to rotate one or more of the vanes 54 to an intermediate position between the open position and the closed position. In the illustrated embodiment, each vane 54 is substantially continuously adjustable between its open and closed positions, i.e. each vane 54 can be held at any angle. Furthermore, each valve has a common mechanical drive mechanism 57 for moving the vanes 54. In this way, all vanes 54 remain in a mutually parallel position and there is a smoother air throughflow, especially at a non-maximum air throughflow. Preferably, the drive mechanism 57 is controlled by the electronic control module 20. In another embodiment, each vane is individually controlled by a drive mechanism.

In the illustrated embodiment, the vanes 54 extend perpendicular to the flow paths through the air-to-air plate heat exchangers 44, 46, i.e. the vanes 54 are perpendicular to the plates in the air-to-air plate heat exchangers 44, 46. This is advantageous for a pressure distribution over the air-to-air plate heat exchangers 44, 46 in particular at a non-maximum air flow. Because of this orientation, there is substantially the same flow between any two plates. However, with vanes that are parallel to the plates in an air-to-air plate heat exchanger, the airflow will be concentrated between certain plates due to the tilted position of the vanes.

In a non-illustrated embodiment, one or more stationary (i.e. non-rotatable) vanes can also be included in the valve. The stationary vanes may have a cross-sectional profile that makes them more rigid against bending in the airflow direction. As a result, the rigidity of the pivoting vanes is increased in their closed position, such that bending of the vanes, when exposed to a differential pressure, is minimized.

It will be readily appreciated that other types of valves are known and suitable for closing off (part of) an inlet side of an air-to-air plate heat exchanger.

In the illustrated embodiment, the heat exchanger 10 furthermore comprises means for dissipating condensation that forms during normal use of the heat exchanger 10 in the air-to-air plate heat exchangers 44, 46. The air-to-air plate heat exchangers 44, 46 distribute, in particular along the centre plane M1, the housing 12 is internally into a first chamber 54 and a second chamber 56 that are separated from each other. Depending on the air flow through the heat exchanger 10 and/or the atmospheric conditions and/or the air characteristics (mainly temperature and humidity) inside the residential building, the first chamber 54 or the second chamber 56 is the one where condensation mainly ends up. In the embodiment where inlet 22 serves for inflow of outside air, there is typically condensation in the second chamber 56 due to the cooling of the air exiting the building. However, as already described above, the heat exchanger 10 is adjustable depending on the already existing piping, such that inlet 22 can also serve as an inflow of indoor air such that the condensation mainly forms in the first chamber 54.

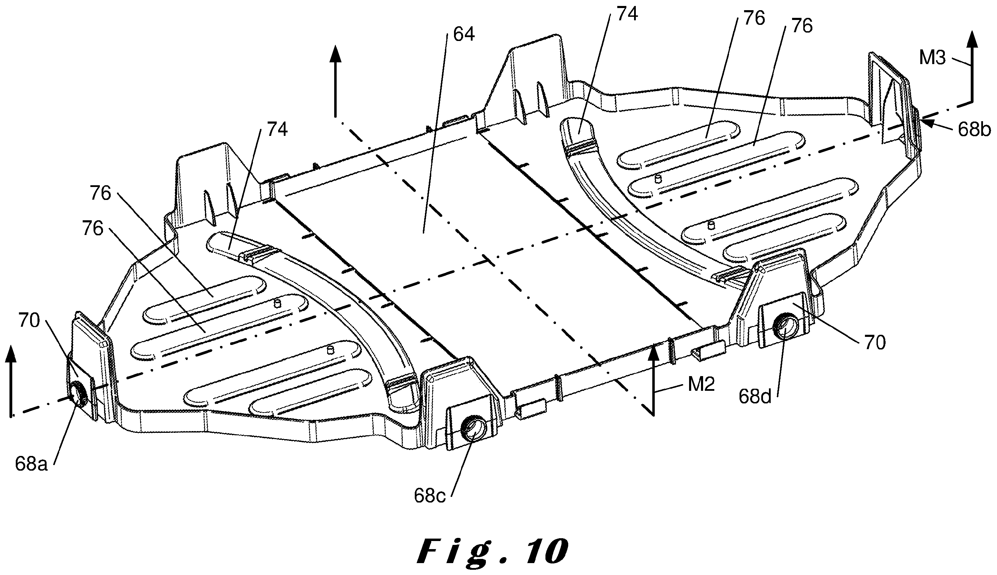

In the illustrated embodiment, the condensation discharge means comprise, on the one hand, a condensation discharge tray 58 (shown separately in Figure 10) and, on the other hand, four condensation discharge openings 60a, 60b, 60c, 60d (best shown in Figure 2). A first condensation discharge opening 60a is provided in the first short side wall 12c; a second condensation discharge opening 60b is provided in the second short side wall 12d; a third condensation discharge opening 60c is provided in the second long side wall 12f; and a fourth condensation discharge opening 60d is provided in the second long side wall 12f. The condensation discharge openings 60a, 60b are located opposite each other and each in a different one of the chambers 54, 56. The condensation discharge openings 60c, 60d are located next to each other and also each in a different one of the chambers 54, 56. Typically, each unused condensate discharge opening 60a, 60b, 60c, 60d is closed off by means of a plug 62, as shown in Figure 6, to avoid unnecessary openings in the housing 12. The one or more used condensate discharge openings 60a, 60b, 60c, 60d are then typically connected to a discharge hose (not shown) for discharging condensation from the heat exchanger 10. This has the advantage that the condensation discharge openings 60a, 60b, 60c, 60d themselves do not need to be removed and/or changed, but only the placement of the plugs 62 and the discharge hose.

The condensation discharge tray 58 is shown in Figure 10 and its placement in the heat exchanger 10 is shown in Figure 6. The condensation discharge tray 58 comprises a plate-shaped part 64, surrounded by a raised edge 66. The plate-shaped part 64 is, as shown in Figure 6, attached to the inside of the top wall 12b. Corresponding to the condensation discharge openings 60a, 60b, 60c, 60d, openings 68a, 68b, 68c, 68d are provided in the raised edge 66. In the illustrated embodiment, flat elements 70 are also provided near the openings 68a, 68b, 68c, 68d which fit into slots 72 provided for this purpose in the housing 12. Edges 74, 76 are provided in the plate-shaped part 64, the general purpose of which is to conduct condensation to one or more of the openings 68a, 68b, 68c, 68d and/or for diverting condensation away from one or more internal components and this, i.a. depending on the orientation of the heat exchanger 10, as described hereafter.

The curved edges 74 have a dual function, i.e. to direct condensation to a respective one of openings 68c, 68d (in case the heat exchanger 10 is mounted on a ceiling or mounted horizontally on a wall) and/or to direct condensation to the raised edge 66 to a respective one of openings 68a, 68b (in case the heat exchanger 10 is mounted vertically on a wall). The main purpose of the curved edges 74 is to divert condensation such that it does not (or at least less easily) approach the drive units 36, 38 and thus reduces the risk that condensation would be carried along by one of the drive units 36, 38. This could lead to undesirable humidity in the residential building or moisture accumulation in one or more pipes connected to the heat exchanger 10. The straight edges 76 also contribute to this functionality by directing condensation, depending on the orientation of the heat exchanger 10, to the raised edge 66 adjacent to a respective one of the openings 68a, 68b or to a respective one of the curved edges 74. If appropriate, the plate-shaped part 64 may be inclined from a central point to the condensation discharge openings 60a, 60b, 60c, 60d, which may contribute to the discharge of condensation. Optionally, the heat exchanger 10 can be arranged at an angle and thus contribute to the removal of condensation.

In the illustrated embodiment, the condensation discharge tray 58 is symmetrical with respect to centre plane M2. There is also a degree of symmetry with respect to centre plane M3, but there are no corresponding openings 68c, 68d. Such symmetry simplifies the assembly of the heat exchanger 10 because the risk of misplacing the condensation discharge tray 58 is lower. In addition, the symmetry also contributes to the overall symmetry of the heat exchanger 10 allowing it to be used in a plurality of orientations. More specifically, the heat exchanger 10 can be used in the following configurations:
- a ceiling position wherein the bottom wall 12a is attached to a ceiling - discharge is possible through either of the two condensation discharge openings in the chamber 54, 56 wherein condensation forms, preferably in one of the two condensation discharge openings 60a, 60b;
- a first vertical wall position wherein the bottom wall 12a is attached against a wall with the first short side wall 12c at the bottom - discharge is possible via condensation discharge opening 60a;
- a second vertical wall position wherein the bottom wall 12a is attached against a wall with the second short side wall 12d at the bottom, i.e. rotated 180° with respect to the first vertical wall position - discharge is possible via condensation discharge opening 60b; and
- a horizontal wall position wherein the bottom wall 12a is attached against a wall with the second long side wall 12f at the bottom - discharge is possible through the one of both condensation discharge openings 60c, 60d, located in the chamber 54, 56 wherein condensation forms.

In an embodiment, the condensation discharge tray 58 is manufactured from plastic, for instance via injection moulding. The advantages of both plastic and injection moulding are assumed to be known by the skilled person. In the illustrated embodiment, the condensation discharge tray 58 is removable from the housing 12. This allows for easy replacement if there is a defect.

The heat exchanger 10 further comprises a first filter unit 78 and a second filter unit 80. Depending on the configuration of the heat exchanger 10, the first filter unit 78 serves to filter fresh air (i.e. air flowing from the outside environment to the residential building) and the second filter serves unit 80 serves to filter outgoing air. A reverse configuration is also possible. The use of two filter units 78, 80 simplifies installation because, even if the heat exchanger 10 were connected incorrectly with respect to inlet or outlet, each air stream passes through a filter unit. Both filter units 78, 80, depending on the filter used, can prevent dust and/or other particles, such as bacteria, viruses, smoke and the like, from entering the residential building.

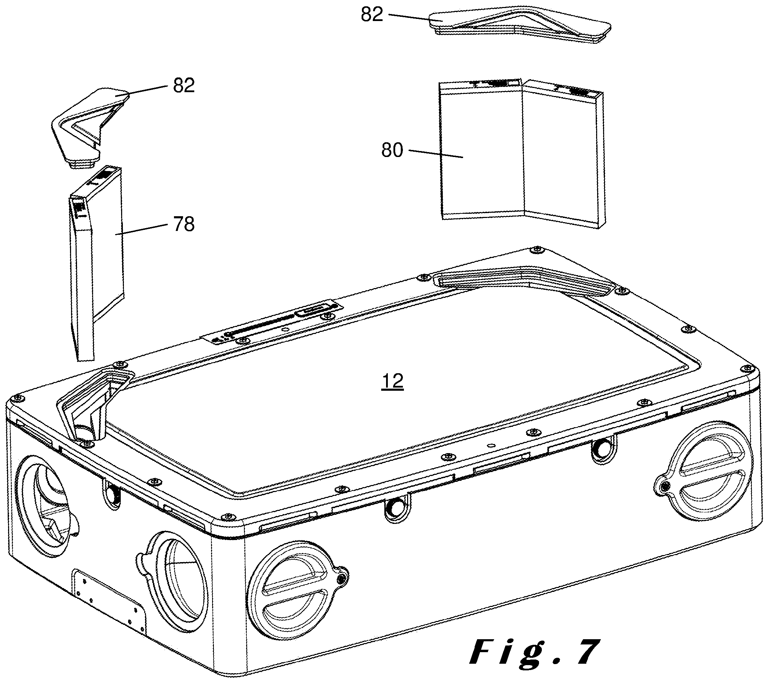

Each filter unit 78, 80 in the illustrated embodiment is formed as a separate element, placed in the housing 12 as shown in Figure 7. This makes replacement easy. A cover 82 is provided to close the housing 12 adjacent to the filter units 78, 80. In the illustrated embodiment, each filter unit 78, 80, on its flow path 32, 34, is placed before the air-to-air plate heat exchangers 44, 46. This contributes to preventing dust and/or other particles, such as bacteria, from entering the plate heat exchangers 44, 46. More specifically, each filter unit 78, 80 is placed in an internal space provided for this purpose. The first internal space is defined by intermediate wall 82 together with (parts of) the first short side wall 12c, the first long side wall 12e, the bottom wall 12a and the top wall 12b; and the second internal space is defined by intermediate wall 84 together with (parts of) the second short side wall 12d, the first long side wall 12e, the bottom wall 12a and the top wall 12b. A passage opening 86 is provided in each intermediate wall 82, 84 which connects the first/second internal space with the air-to-air plate heat exchangers 44, 46. In particular, as best shown in Figure 17, each passage opening 86 communicates with an intermediate space 92 which is formed by a respective intermediate wall 94. These intermediate walls 94 ensure a separation of the air streams 32, 34 at the location of the drive units 36, 38.

In the illustrated embodiment, each filter unit comprises a first flat filter 88 and a second flat filter 90 which form a smallest angle α (indicated in Figure 5) with respect to each other. This angle α is directed towards the passage opening 86, i.e. away from the respective inlet 22, 24. In other words, a largest angle β between the flat filters 88, 90 is directed towards the respective inlet 22, 24. In the illustrated embodiment, α is substantially 150° and β is substantially 210°. Such a folded filter unit 78, 80 allows, in a compact housing 12, to provide sufficient space between a filter unit 78, 80 and the passage opening 86 and thus to avoid the air flow having to make too sharp a bend, which can lead to a loss of pressure.

Furthermore, the bisector B between one of the short side walls 12c, 12d and the first long side wall 12e is indicated in Figure 5. It is clear that the passage opening 86 is not symmetrical with respect to this bisector B. This results in a smoother flow path over inlet opening 22b, 24b to the passage openings as compared to a flow path over inlet port 22a, 24a.

In an embodiment, each filter 88, 90 has a height between 150 and 400 mm and in particular between 200 and 300 mm. The height of each filter 88, 90 in the illustrated embodiment is approximately 251 mm. In an embodiment, each filter 88, 90 has a depth between 10 and 50 mm, in particular between 20 and 40 mm and more in particular between 25 and 35 mm. The depth of each filter 88, 90 is approximately 29 mm in the illustrated embodiment. In an embodiment, the filters 88, 90 are hingedly connected to each other and together have a total length between 200 and 500 mm, which total length is in particular between 250 and 400 mm. In the version shown, this total length is 290 mm.

In the illustrated embodiment, the filter units 78, 80 (including the internal space and passage openings 86) are symmetrical with respect to each other about the centre plane M1. This ensures the same airflow in each configuration (left/right) of the heat exchanger 10.

In an embodiment, one or more of the filters 88, 90 are formed as pleated filters that provide improved filtration over straight filters.

It will be readily appreciated that other types of filter units (including flat filter units) are known and suitable for use in a heat exchanger based on an air-to-air plate heat exchanger.

The attachment of the heat exchanger 10 to a wall (not shown), in particular to a ceiling, will be described with reference to Figures 11 to 15B. The mounting shown makes use of a mounting bracket 100. The mounting bracket 100 comprises a flat wall 102 which is provided at its ends with upright walls 104, 106 with an engagement opening 108 therein. In other words, the mounting bracket 100 is U-shaped. To increase rigidity, the mounting bracket 100 is also provided with folded edges 110. The flat wall 102 is typically attached to the wall or ceiling of the residential building using conventional mounting means.

Hook means are provided on the housing 12 of the heat exchanger 10 for attachment to the mounting bracket 100. In the illustrated embodiment, a first hook 112 is attached to the first short side wall 12c and a second hook 114 is attached to the second short side wall 12d. Although it is possible to fasten each hook 112, 114 directly to the housing 12 by conventional means, it is advantageous to use a U-shaped connecting part 116. This U-shaped connecting part 116 has two parallel legs, one leg of which is on the outside of the housing wall and the other leg is on the inside of the housing wall (or in a slot provided for this purpose in the housing wall). For fixing, a bolt, screw, or the like is placed through both legs and a portion of the housing wall. The hook 112, 114 is then attached to the outer U-shaped leg by means of an angled wall 118, for example via conventional connecting means 120, such as a bolt or screw.

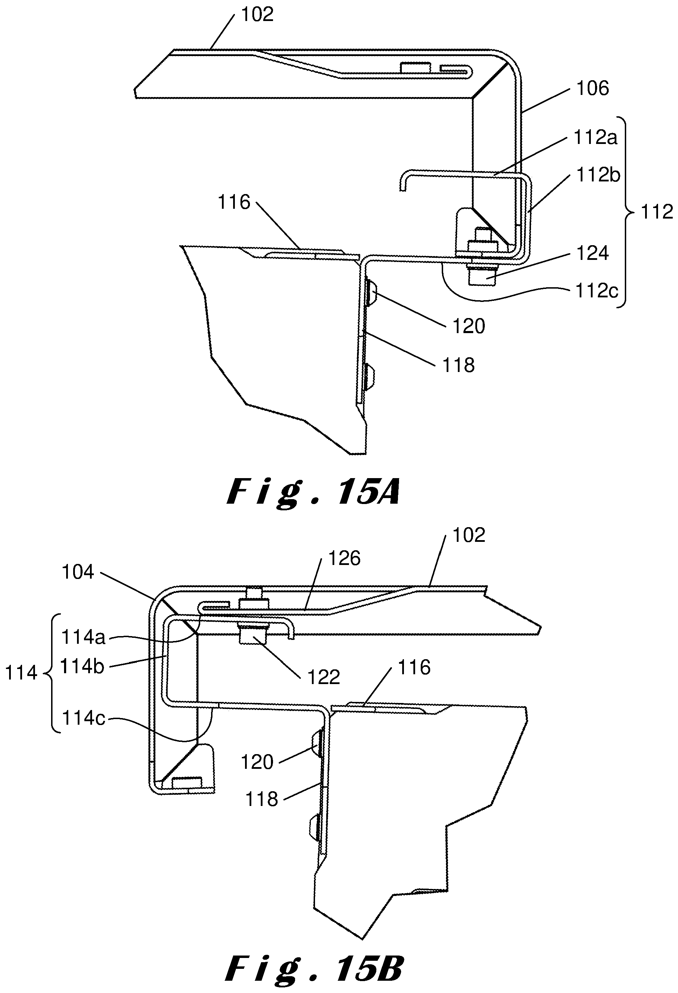

Figures 11 and 12 illustrate a first phase of the ceiling mount. In this phase, a first side of the heat exchanger 10 is attached to the mounting bracket 100. This was already attached to the ceiling in an earlier phase. The attachment takes place by placing hook 112 through engagement opening 108. As best shown in Figures 15A and 15B, each hook 112, 114 includes a U-shaped portion having a connecting leg 112c, 114c that connects to the housing 12, an upright leg 112b, 114b, and a gripping leg 112a, 114a that engages in a engagement opening. The gripping leg 112a, 114a and the connecting leg 112c, 114c are parallel to each other in the illustrated embodiment. Both the mounting bracket 100 and each of the hook means are intended to be able to support the heat exchanger 10 alone. In other words, the heat exchanger 10 can hang via hook 112 on the mounting bracket 100. This allows easy maintenance, for example. In addition, if the heat exchanger 10 is set such that condensation is drained through the condensation discharge opening in the housing wall to which hook 114 is attached, there is also proper discharge of condensation by gravity, prior to servicing.

In a next phase of the assembly, the heat exchanger 10 is rotated about hook 112 until the bottom wall 12a is substantially parallel to the flat wall 102, e.g. over an angle of at least 60°, 70°, 80° or more. The U-shaped design of each hook 112, 114 makes such rotation easy. Moreover, the length of the gripping leg 112a, 114a allows a horizontal displacement of the hook 112 relative to the gripping opening 108. After rotation, the heat exchanger 10 is then shifted horizontally such that the hook 114 engages in gripping opening 108 in the upright wall 104.

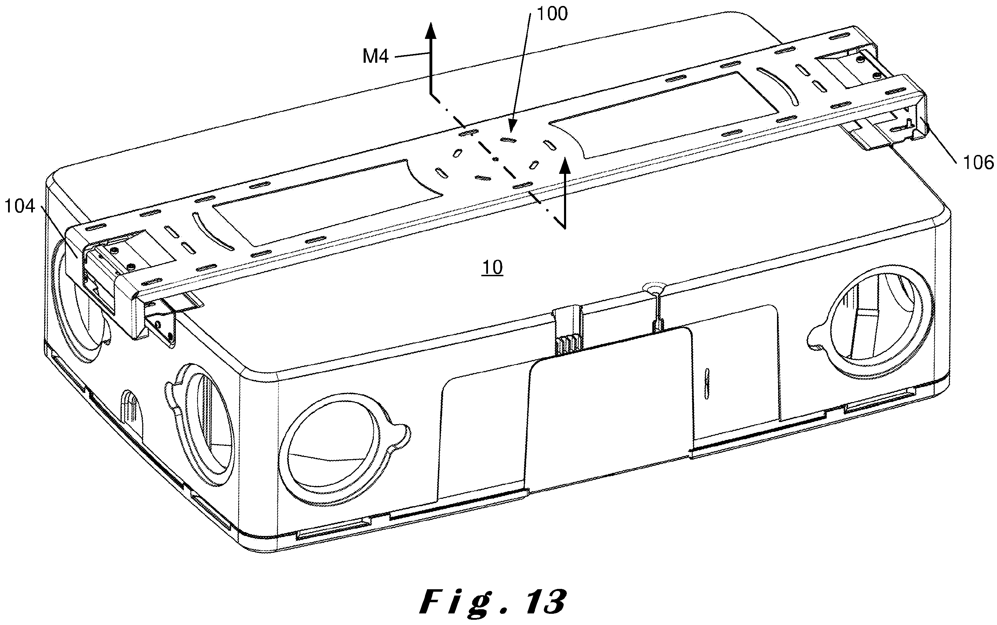

In an alternative embodiment, as shown in Figures 13, 14 and 15B, the hook 114 does not engage the engagement opening 108 in the upright wall 104. In this embodiment, the gripping leg 114a is fixedly attached by conventional means 122 to the mounting bracket 100, in particular to a tab 126 extending from the flat wall 102. This is an advantageous embodiment because it allows the heat exchanger 10 to be placed at a slight inclination. This can contribute to the discharge of condensation.

A securing means 124 (best shown in Figure 15A) is further provided which prevents the hook 112 from accidentally becoming detached from the engagement opening 108 in the upright wall 106. This securing means 124 comprises a bolt, screw, or the like and connects the connecting leg 112c with one end of the upright wall 106, in particular with the folded edge 110, located at this end. Such a locking can also be provided at the other hook 114 in case it protrudes through the engagement opening 108 in the upright wall 104.

In the illustrated embodiment, the mounting bracket 100 is symmetrical about centre plane M4 (shown in Figure 13) as well as about a centre plane perpendicular to plane M4. Therefore, there is only one embodiment of the mounting bracket 100 suitable for rotatably mounting the heat exchanger 10 on any desired side.

In the illustrated embodiment, the mounting bracket 100 as well as the hook means are each manufactured from one or more metal plates by successive processing steps, such as removing material (e.g. by means of stamping, milling, etc.), bending operations, etc.

It will be readily appreciated that other ways are known and are suitable for attaching a heat exchanger 10 to a wall.

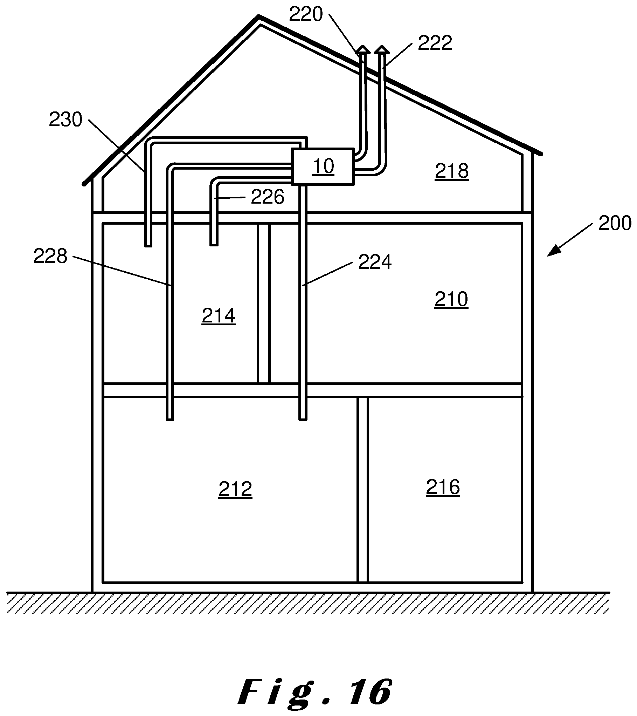

Figure 16 shows a schematic representation of a residential building 200 comprising a ventilation system with a heat exchanger 10 according to the present invention. In the illustrated embodiment, the residential building 200 comprises five rooms 210, 212, 214, 216, 218. These can be physically separate rooms (e.g. a bedroom, a living room, a kitchen, a bathroom, etc.), but these can be also entire floors of the residential building 200 (e.g. the ground floor) or a combination of both. In the illustrated embodiment of Figure 16, room 210 is representative of the bedrooms of the residential building 200; room 212 is representative of part of the ground floor (e.g. the living space and/or kitchen) of the residential building 200; room 214 is representative of the bathroom of the residential building 200; room 216 is representative of part of the ground floor (e.g. an office and/or garage) of the residential building 200; and room 218 is representative of the attic of the residential building 200 where part of a technical room is provided.

The ventilation system comprises the heat exchanger 10, on the one hand, and a number of conduits 220, 222, 224, 226, 228, 230 on the other. Conduit 220 is connected to the heat exchanger 10, e.g. to inlet opening 24b, and serves for the supply of outside air; conduit 222 is connected to the heat exchanger 10, e.g. to outlet opening 26b, and serves to exhaust air to the outside environment; conduit 224 is connected to the heat exchanger 10, e.g. to outlet opening 28a, and serves to supply air to room 212; conduit 226 is connected to the heat exchanger 10, e.g. to outlet opening 28b, and serves to supply air to room 214; conduit 228 is connected to the heat exchanger 10, e.g. to inlet opening 22b, and serves to exhaust air from room 212; and conduit 230 is connected to the heat exchanger 10, e.g. to inlet opening 22a, and serves for the discharge of air from room 214. More or fewer conduits may be used if desired. If necessary, there may also be pipes between rooms without the intervention of the heat exchanger 10. Typically, a controllable valve (not shown) is provided on each pipe for regulating the air flow to and from a room. In contrast to the valves 48, 50 in the heat exchanger 10, it is possible and permitted to close these valves completely during use. Obviously, there is not necessarily direct communication between the heat exchanger 10 and each room in the residential building 200. In another configuration, there is direct communication between the heat exchanger 10 and each room. It will be readily appreciated that the configuration of the ventilation system in the residential building 200 is illustrative only and a variety of other configurations are possible.

The heat exchanger 10 of the present invention can be used to utilize the typically high humidity level in a bathroom (i.e. room 214) to humidify the incoming air before distributing it to rooms 210 and/or 212. On the other hand, if the humidity level in rooms 210, 212 is already sufficiently high, the air from room 214 can be sent out through the heat exchanger 10 without any interaction with the air drawn in from the outside - it can then pass through one of the plate heat exchangers 48, 50 and may or may not interact with the outgoing air from room 210 and/or 212. The heat exchanger 10 therefore offers a high degree of flexibility for accurately controlling the air in the indoor space of the residential building.

While certain aspects of the present invention have been described with respect to specific embodiments, it is to be understood that these aspects may be implemented in other forms within the scope of protection as defined by the claims.

## Claims

1. Ventilation system for a residential building (200), said ventilation system comprising a heat exchanger (10), said heat exchanger comprising:
- a housing (12) wherein a first inlet (22), a second inlet (24), a first outlet (26), and a second outlet (28) are provided, wherein the first inlet and the first outlet together are part of a first flow path (32) and wherein the second inlet and second outlet together are part of a second flow path (34);
- a first air-to-air plate heat exchanger (44) and a second air-to-air plate heat exchanger (46) positioned inside the housing in a parallel airflow configuration, wherein each air-to-air plate heat exchanger comprises a plurality of first channels that are part of the first flow path and a plurality of second channels that are part of the second flow path, wherein the heat exchanger does not comprise a flow path around the plate heat exchangers; and
- a first valve (48) positioned on the first flow path inside the housing adjacent to the first air-to-air plate heat exchanger and a second valve (50) positioned on the second flow path inside the housing adjacent to the second air-to-air plate heat exchanger, wherein each valve is adjustable between at least an open position, a closed position and an intermediate position,
**characterised in that** each valve comprises a plurality of adjustable vanes (54) that are mutually parallel and rotatable about their longitudinal direction, wherein, in the closed position of a valve, the adjustable vanes together form a continuous plane, wherein the first channels and the second channels extend in an orientation perpendicular to said longitudinal direction.

2. Ventilation system according to claim 1, **characterised in that** the ventilation system further comprises a control module configured for independently controlling the first valve and the second valve, wherein the control module is configured for controlling the first valve and the second valve to at least one of the following configurations:
- an open configuration wherein the first and second valve are in their open position; and
- a bypass configuration wherein the first and second valves are in their closed position.

3. Ventilation system according to claim 1, **characterised in that** the first air-to-air plate heat exchanger is a heat recovery ventilation unit and the second air-to-air plate heat exchanger is an energy recovery ventilation unit.

4. Ventilation system according to claim 3, **characterised in that** the ventilation system further comprises a control module, configured for independently controlling the first valve and the second valve, wherein the control module is configured for controlling the first valve and the second valve to at least one of the following configurations:
- an open configuration wherein the first and second valves are in their open position;
- a bypass configuration wherein the first and second valves are in their closed position;
- an energy recovery configuration wherein the first valve is in its closed position and the second valve is not in its closed position; and
- a heat recovery configuration wherein the first valve is not in its closed position and wherein the second valve is in its closed position.

5. Ventilation system according to claim 3, **characterised in that** the heat exchanger is further provided with a third valve, positioned on the first flow path inside the housing adjacent to the second air-to-air plate heat exchanger and a fourth valve, positioned on the second flow path inside the housing adjacent to the first air-to-air plate heat exchanger, wherein the first valve and the fourth valve are preferably located on opposing sides of the first air-to-air plate heat exchanger and wherein the second valve and the third valve are preferably located on opposing sides of the second air-to-air plate heat exchanger.

6. Ventilation system according to claim 5, **characterised in that** the ventilation system further comprises a control module, configured for independently controlling each of the valves, wherein the control module is configured for controlling the valves to at least one of the following configurations:
- an open configuration wherein each valve is in its open position;
- a closed configuration wherein each valve is in its closed position;
- an energy recovery configuration wherein the first valve and the fourth valve are in their closed position and the second valve and the third valve are not in their closed position;
- a heat recovery configuration wherein the first valve and the fourth valve are not in their closed position and the second valve and the third valve are in their closed position;
- a first control configuration wherein the first valve and the fourth valve are in their open position and the second valve and the third valve are in their intermediate position;
- a second control configuration wherein the first valve and the fourth valve are in their intermediate position and the second valve and the third valve are in their open position;
- a third control configuration wherein each valve is in its intermediate position;
- a first bypass configuration wherein the first valve and the second valve are in their closed position and the third valve and the fourth valve are not in their closed position; and
- a second bypass configuration wherein the first valve and the second valve are not in their closed position and wherein the third valve and the fourth valve are in their closed position.

7. Ventilation system according to any one of the preceding claims, **characterised in that** each valve comprises between 2 and 10 vanes.

8. Ventilation system according to claim 7, **characterised in that** each valve comprises between 3 and 6 vanes.

9. Ventilation system according to any one of the preceding claims, **characterised in that** each air-to-air plate heat exchanger has a first inlet side and a second inlet side, and wherein each valve comprises a rectangular frame (52) on which the plurality of adjustable vanes are rotatably mounted, said rectangular frame of a respective valve connecting to a respective inlet side of a respective air-to-air plate heat exchanger.

10. Ventilation system according to any one of the preceding claims, **characterised in that** each valve is located on its respective flow path in front of the respective air-to-air plate heat exchanger.

11. Ventilation system according to any one of the preceding claims, **characterised in that** each valve is substantially continuously adjustable between its open position and its closed position.

12. Ventilation system according to any one of the preceding claims, **characterised in that** the first air-to-air plate heat exchanger and/or the second air-to-air plate heat exchanger operate on the basis of a cross flow.

13. Ventilation system according to any one of the preceding claims, **characterised in that** the ventilation system further comprises a sensor system, configured for measuring the temperature and/or the degree of humidity and/or the carbon dioxide content and/or the volatile organic matter content and/or the fine particulate matter content of the air of an indoor space and/or an outdoor space and for forwarding the measurements to the control module and wherein the heat exchanger further comprises a control module configured for independently controlling each of the valves based on the received measurements.

14. Residential home (200) comprising the ventilation system according to any one of the preceding claims.

15. Use of the ventilation system according to any one of claims 1 to 13, for a mechanical balanced ventilation with heat recovery (MVHR) application, in particular for controlling heat and/or humidity in an indoor space of a building (200).

## Patentansprüche

1. Lüftungssystem für ein Wohngebäude (200), wobei das Lüftungssystem einen Wärmetauscher (10) umfasst, wobei der Wärmetauscher Folgendes umfasst:
- ein Gehäuse (12), wobei ein erster Einlass (22), ein zweiter Einlass (24), ein erster Auslass (26) und ein zweiter Auslass (28) vorgesehen sind, wobei der erste Einlass und der erste Auslass zusammen Teil eines ersten Strömungspfads (32) sind und wobei der zweite Einlass und der zweite Auslass zusammen Teil eines zweiten Strömungspfads (34) sind;
- einen ersten Luft-Luft-Plattenwärmetauscher (44) und einen zweiten Luft-Luft-Plattenwärmetauscher (46), die in dem Gehäuse in einer parallelen Luftstromkonfiguration angeordnet sind, wobei jeder Luft-Luft-Plattenwärmetauscher eine Vielzahl von ersten Kanälen, die Teil des ersten Strömungspfads sind, und eine Vielzahl von zweiten Kanälen, die Teil des zweiten Strömungspfads sind, umfasst, wobei der Wärmetauscher keinen Strömungspfad um die Plattenwärmetauscher herum umfasst; und
- ein erstes Ventil (48), das in dem ersten Strömungspfad in dem Gehäuse benachbart zu dem ersten Luft-Luft-Plattenwärmetauscher angeordnet ist, und ein zweites Ventil (50), das in dem zweiten Strömungspfad in dem Gehäuse benachbart zu dem zweiten Luft-Luft-Plattenwärmetauscher angeordnet ist, wobei jedes Ventil zumindest zwischen einer geöffneten Position, einer geschlossenen Position und einer Zwischenposition einstellbar ist,
**dadurch gekennzeichnet, dass** jedes Ventil eine Vielzahl von einstellbaren Lamellen (54) umfasst, die zueinander parallel sind und um ihre Längsrichtung drehbar sind, wobei in der geschlossenen Position eines Ventils die einstellbaren Lamellen zusammen eine durchgehende Ebene bilden, wobei sich die ersten Kanäle und die zweiten Kanäle in einer Orientierung senkrecht zu dieser Längsrichtung erstrecken.

2. Lüftungssystem nach Anspruch 1, **dadurch gekennzeichnet, dass** das Lüftungssystem weiter ein Steuerungsmodul umfasst, das konfiguriert ist, um das erste Ventil und das zweite Ventil unabhängig voneinander zu steuern, wobei das Steuerungsmodul konfiguriert ist, um das erste Ventil und das zweite Ventil in zumindest eine der folgenden Konfigurationen zu steuern:
- eine geöffnete Konfiguration, wobei das erste und das zweite Ventil in ihrer geöffneten Position sind; und
- eine Bypass-Konfiguration, wobei das erste und das zweite Ventil in ihrer geschlossenen Position sind.

3. Lüftungssystem nach Anspruch 1, **dadurch gekennzeichnet, dass** der erste Luft-Luft-Plattenwärmetauscher eine Lüftungseinheit zu Wärmerückgewinnung und der zweite Luft-Luft-Plattenwärmetauscher eine Lüftungseinheit zur Energierückgewinnung ist.

4. Lüftungssystem nach Anspruch 3, **dadurch gekennzeichnet, dass** das Lüftungssystem weiter ein Steuerungsmodul umfasst, das konfiguriert ist, um das erste Ventil und das zweite Ventil unabhängig voneinander zu steuern, wobei das Steuerungsmodul konfiguriert ist, um das erste Ventil und das zweite Ventil in zumindest eine der folgenden Konfigurationen zu steuern:
- eine geöffnete Konfiguration, wobei das erste und das zweite Ventil in ihrer geöffneten Position sind;
- eine Bypass-Konfiguration, wobei das erste und das zweite Ventil in ihrer geschlossenen Position sind;
- eine Energierückgewinnungskonfiguration, wobei das erste Ventil in seiner geschlossenen Position ist und das zweite Ventil nicht in seiner geschlossenen Position ist; und
- eine Wärmerückgewinnungskonfiguration, wobei das erste Ventil nicht in seiner geschlossenen Position ist und wobei das zweite Ventil in seiner geschlossenen Position ist.

5. Lüftungssystem nach Anspruch 3, **dadurch gekennzeichnet, dass** der Wärmetauscher weiter mit einem dritten Ventil, das in dem ersten Strömungspfad in dem Gehäuse benachbart zu dem zweiten Luft-Luft-Plattenwärmetauscher angeordnet ist, und einem vierten Ventil, das in dem zweiten Strömungspfad in dem Gehäuse benachbart zu dem ersten Luft-Luft-Plattenwärmetauscher angeordnet ist, versehen ist, wobei das erste Ventil und das vierte Ventil bevorzugt auf gegenüberliegenden Seiten des ersten Luft-Luft-Plattenwärmetauschers befindlich sind und wobei das zweite Ventil und das dritte Ventil bevorzugt auf gegenüberliegenden Seiten des zweiten Luft-Luft-Plattenwärmetauschers befindlich sind.

6. Lüftungssystem nach Anspruch 5, **dadurch gekennzeichnet, dass** das Lüftungssystem weiter ein Steuerungsmodul umfasst, das konfiguriert ist, um jedes der Ventile unabhängig voneinander zu steuern, wobei das Steuerungsmodul konfiguriert ist, um die Ventile in zumindest eine der folgenden Konfigurationen zu steuern:
- eine geöffnete Konfiguration, wobei jedes Ventil in seiner geöffneten Position ist;
- eine geschlossene Konfiguration, wobei jedes Ventil in seiner geschlossenen Position ist;
- eine Energierückgewinnungskonfiguration, wobei das erste Ventil und das vierte Ventil in ihrer geschlossenen Position sind und das zweite Ventil und das dritte Ventil nicht in ihrer geschlossenen Position sind;
- eine Wärmerückgewinnungskonfiguration, wobei das erste Ventil und das vierte Ventil nicht in ihrer geschlossenen Position sind und das zweite Ventil und das dritte Ventil in ihrer geschlossenen Position sind;
- eine erste Steuerkonfiguration, wobei das erste Ventil und das vierte Ventil in ihrer geöffneten Position sind und das zweite Ventil und das dritte Ventil in ihrer Zwischenposition sind;
- eine zweite Steuerkonfiguration, wobei das erste Ventil und das vierte Ventil in ihrer Zwischenposition sind und das zweite Ventil und das dritte Ventil in ihrer geöffneten Position sind;
- eine dritte Steuerkonfiguration, wobei jedes Ventil in seiner Zwischenposition ist;
- eine erste Bypass-Konfiguration, wobei das erste Ventil und das zweite Ventil in ihrer geschlossenen Position sind und das dritte Ventil und das vierte Ventil nicht in ihrer geschlossenen Position sind; und
- eine zweite Bypass-Konfiguration, wobei das erste Ventil und das zweite Ventil nicht in ihrer geschlossenen Position sind und wobei das dritte Ventil und das vierte Ventil in ihrer geschlossenen Position sind.

7. Lüftungssystem nach einem der vorstehenden Ansprüche, **dadurch gekennzeichnet, dass** jedes Ventil zwischen 2 und 10 Lamellen umfasst.

8. Lüftungssystem nach Anspruch 7, **dadurch gekennzeichnet, dass** jedes Ventil zwischen 3 und 6 Lamellen umfasst.

9. Lüftungssystem nach einem der vorstehenden Ansprüche, **dadurch gekennzeichnet, dass** jeder Luft-Luft-Plattenwärmetauscher eine erste Einlassseite und eine zweite Einlassseite aufweist und wobei jedes Ventil einen rechteckigen Rahmen (52) umfasst, an dem die Vielzahl von einstellbaren Lamellen drehbar gelagert ist, wobei der rechteckige Rahmen eines jeweiligen Ventils mit einer jeweiligen Einlassseite eines jeweiligen Luft-Luft-Plattenwärmetauschers verbindet.

10. Lüftungssystem nach einem der vorstehenden Ansprüche, **dadurch gekennzeichnet, dass** jedes Ventil in seinem jeweiligen Strömungspfad vor dem jeweiligen Luft-Luft-Plattenwärmetauscher befindlich ist.

11. Lüftungssystem nach einem der vorstehenden Ansprüche, **dadurch gekennzeichnet, dass** jedes Ventil im Wesentlichen durchgehend zwischen seiner geöffneten Position und seiner geschlossenen Position einstellbar ist.

12. Lüftungssystem nach einem der vorstehenden Ansprüche, **dadurch gekennzeichnet, dass** der erste Luft-Luft-Plattenwärmetauscher und/oder der zweite Luft-Luft-Plattenwärmetauscher auf der Basis eines Kreuzstroms arbeiten.

13. Lüftungssystem nach einem der vorstehenden Ansprüche, **dadurch gekennzeichnet, dass** das Lüftungssystem weiter ein Sensorsystem umfasst, das konfiguriert ist, um die Temperatur und/oder den Grad der Luftfeuchtigkeit und/oder den Kohlendioxidgehalt und/oder den Gehalt an flüchtigen organischen Verbindungen und/oder den Feinstaubgehalt der Luft eines Innenraums und/oder eines Außenraums zu messen und die Messwerte an das Steuerungsmodul weiterzuleiten, und wobei der Wärmetauscher weiter ein Steuerungsmodul umfasst, das konfiguriert ist, um jedes der Ventile unabhängig auf der Grundlage der empfangenen Messwerte zu steuern.

14. Wohnhaus (200), umfassend das Lüftungssystem nach einem der vorstehenden Ansprüche.

15. Verwendung des Lüftungssystems nach einem der Ansprüche 1 bis 13 für eine mechanische ausgewogene Lüftung mit Wärmerückgewinnung (MVHR)-Anwendung, insbesondere zur Regelung von Wärme und/oder Luftfeuchtigkeit in einem Innenraum eines Gebäudes (200).

## Revendications

1. Système de ventilation pour un bâtiment résidentiel (200), ledit système de ventilation comprenant un échangeur de chaleur (10), ledit échangeur de chaleur comprenant :
- un boîtier (12) dans lequel sont disposées une première entrée (22), une seconde entrée (24), une première sortie (26) et une seconde sortie (28), dans lequel la première entrée et la première sortie font ensemble partie d'un premier chemin d'écoulement (32) et dans lequel la seconde entrée et la seconde sortie font ensemble partie d'un second chemin d'écoulement (34) ;
- un premier échangeur de chaleur à plaques air-air (44) et un second échangeur de chaleur à plaques air-air (46) positionnés à l'intérieur du boîtier dans une configuration à flux d'air parallèle, dans lequel chaque échangeur de chaleur à plaques air-air comprend une pluralité de premiers canaux faisant partie du premier chemin d'écoulement et une pluralité de seconds canaux faisant partie du second chemin d'écoulement, dans lequel l'échangeur de chaleur ne comprend pas de chemin d'écoulement autour des échangeurs de chaleur à plaques ; et
- une première vanne (48) positionnée sur le premier chemin d'écoulement à l'intérieur du boîtier adjacent au premier échangeur de chaleur à plaques air-air et une deuxième vanne (50) positionnée sur le second chemin d'écoulement à l'intérieur du boîtier adjacent au second échangeur de chaleur à plaques air-air, dans lequel chaque vanne est réglable entre au moins une position ouverte, une position fermée et une position intermédiaire,
**caractérisé en ce que** chaque vanne comprend une pluralité d'ailettes réglables (54) qui sont mutuellement parallèles et rotatives autour de leur direction longitudinale, dans lequel, en position fermée d'une vanne, les ailettes réglables forment ensemble un plan continu, dans lequel les premiers canaux et les seconds canaux s'étendent dans une orientation perpendiculaire à ladite direction longitudinale.

2. Système de ventilation selon la revendication 1, **caractérisé en ce que** le système de ventilation comprend en outre un module de commande configuré pour commander indépendamment la première vanne et la deuxième vanne, dans lequel le module de commande est configuré pour commander la première vanne et la deuxième vanne selon au moins l'une des configurations suivantes :
- une configuration ouverte dans laquelle la première et la deuxième vanne sont dans leur position ouverte ; et
- une configuration de dérivation dans laquelle les première et deuxième vannes sont dans leur position fermée.

3. Système de ventilation selon la revendication 1, **caractérisé en ce que** le premier échangeur de chaleur à plaques air-air est une unité de ventilation à récupération de chaleur et le second échangeur de chaleur à plaques air-air est une unité de ventilation à récupération d'énergie.

4. Système de ventilation selon la revendication 3, **caractérisé en ce que** le système de ventilation comprend en outre un module de commande, configuré pour commander indépendamment la première vanne et la deuxième vanne, dans lequel le module de commande est configuré pour commander la première vanne et la deuxième vanne selon au moins l'une des configurations suivantes :
- une configuration ouverte dans laquelle les première et deuxième vannes sont dans leur position ouverte ;
- une configuration de dérivation dans laquelle les première et deuxième vannes sont dans leur position fermée ;
- une configuration de récupération d'énergie dans laquelle la première vanne est dans sa position fermée et la deuxième vanne n'est pas dans sa position fermée ; et
- une configuration de récupération de chaleur dans laquelle la première vanne n'est pas dans sa position fermée et dans laquelle la deuxième vanne est dans sa position fermée.

5. Système de ventilation selon la revendication 3, **caractérisé en ce que** l'échangeur de chaleur est en outre muni d'une troisième vanne, positionnée sur le premier chemin d'écoulement à l'intérieur du boîtier adjacent au second échangeur de chaleur à plaques air-air, et d'une quatrième vanne, positionnée sur le second chemin d'écoulement à l'intérieur du boîtier adjacent au premier échangeur de chaleur à plaques air-air, dans lequel la première vanne et la quatrième vanne sont de préférence situées sur des côtés opposés du premier échangeur de chaleur à plaques air-air, et dans lequel la deuxième vanne et la troisième vanne sont de préférence situées sur des côtés opposés du second échangeur de chaleur à plaques air-air.

6. Système de ventilation selon la revendication 5, **caractérisé en ce que** le système de ventilation comprend en outre un module de commande, configuré pour commander indépendamment chacune des vannes, dans lequel le module de commande est configuré pour commander les vannes selon au moins l'une des configurations suivantes :
- une configuration ouverte dans laquelle chaque vanne est dans sa position ouverte ;
- une configuration fermée dans laquelle chaque vanne est dans sa position fermée ;
- une configuration de récupération d'énergie dans laquelle la première vanne et la quatrième vanne sont dans leur position fermée et la deuxième vanne et la troisième vanne ne sont pas dans leur position fermée ;
- une configuration de récupération de chaleur dans laquelle la première vanne et la quatrième vanne ne sont pas dans leur position fermée et la deuxième vanne et la troisième vanne sont dans leur position fermée ;
- une première configuration de commande dans laquelle la première vanne et la quatrième vanne sont dans leur position ouverte et la deuxième vanne et la troisième vanne sont dans leur position intermédiaire ;
- une deuxième configuration de commande dans laquelle la première vanne et la quatrième vanne sont dans leur position intermédiaire et la deuxième vanne et la troisième vanne sont dans leur position ouverte ;
- une troisième configuration de commande dans laquelle chaque vanne est dans sa position intermédiaire ;
- une première configuration de dérivation dans laquelle la première vanne et la deuxième vanne sont dans leur position fermée et la troisième vanne et la quatrième vanne ne sont pas dans leur position fermée ; et
- une seconde configuration de dérivation dans laquelle la première vanne et la deuxième vanne ne sont pas dans leur position fermée et dans laquelle la troisième vanne et la quatrième vanne sont dans leur position fermée.

7. Système de ventilation selon l'une quelconque des revendications précédentes, **caractérisé en ce que** chaque vanne comprend entre 2 et 10 ailettes.

8. Système de ventilation selon la revendication 7, **caractérisé en ce que** chaque vanne comprend entre 3 et 6 ailettes.

9. Système de ventilation selon l'une quelconque des revendications précédentes, **caractérisé en ce que** chaque échangeur de chaleur à plaques air-air présente un premier côté entrée et un second côté entrée, et dans lequel chaque vanne comprend un cadre rectangulaire (52) sur lequel sont montées de manière rotative la pluralité d'ailettes réglables, ledit cadre rectangulaire d'une vanne respective étant relié à un côté entrée respectif d'un échangeur de chaleur à plaques air-air respectif.

10. Système de ventilation selon l'une quelconque des revendications précédentes, **caractérisé en ce que** chaque vanne est située sur son chemin d'écoulement respectif en amont de l'échangeur de chaleur à plaques air-air respectif.

11. Système de ventilation selon l'une quelconque des revendications précédentes, **caractérisé en ce que** chaque vanne est réglable de manière sensiblement continue entre sa position ouverte et sa position fermée.

12. Système de ventilation selon l'une quelconque des revendications précédentes, **caractérisé en ce que** le premier échangeur de chaleur à plaques air-air et/ou le second échangeur de chaleur à plaques air-air fonctionne sur la base d'un flux croisé.

13. Système de ventilation selon l'une quelconque des revendications précédentes, **caractérisé en ce que** le système de ventilation comprend en outre un système de détection configuré pour mesurer la température et/ou le degré d'humidité et/ou la teneur en dioxyde de carbone et/ou la teneur en matières organiques volatiles et/ou la teneur en particules fines de l'air d'un espace intérieur et/ou d'un espace extérieur et pour transmettre les mesures au module de commande, et dans lequel l'échangeur de chaleur comprend en outre un module de commande configuré pour commander indépendamment chacune des vannes en fonction des mesures reçues.

14. Maison résidentielle (200) comprenant le système de ventilation selon l'une quelconque des revendications précédentes.

15. Utilisation du système de ventilation selon l'une quelconque des revendications 1 à 13, pour une application de ventilation mécanique à récupération de chaleur (VMC double flux), en particulier pour la commande de la chaleur et/ou de l'humidité dans un espace intérieur d'un bâtiment (200).
